# EUROPEAN PATENT APPLICATION

(11) **EP 4 486 027 A1**
(43) Date of publication of application: **01.01.2025**
(21) Application number: 23777801.4
(22) Date of filing: 10.03.2023
(51) Int. Cl.: H04W 64/00

(54) **WIRELESS COMMUNICATION METHOD AND APPARATUS**

(30) Priority: 28.03.2022 CN 202210315238
(71) Applicant: Huawei Technologies Co., Ltd., Shenzhen, Guangdong 518129 (CN)
(72) Inventor: YING, Jiangwei, Shenzhen, Guangdong 518129 (CN); XU, Shengfeng, Shenzhen, Guangdong 518129 (CN); LI, Meng, Shenzhen, Guangdong 518129 (CN); ZHOU, Runze, Shenzhen, Guangdong 518129 (CN)
(74) Representative: Goddar, Heinz J.
(86) International application number: PCT/CN2023/080909
(87) International publication number: WO 2023/185424

(57) **Abstract**

Embodiments of this application provide a wireless communication method and apparatus. The method includes: A first device determines a location manner based on a location requirement on a first terminal device and a second terminal device, where the location manner includes at least one of the following manners: performing positioning through a first interface between the first terminal device and a corresponding access network device, performing positioning through a second interface between the second terminal device and a corresponding access network device, and performing positioning through a third interface between the first terminal device and the second terminal device. The first device sends first information according to the location manner, where the first information is used to perform positioning in the location manner. In this way, different location manners can be used in different scenarios, thereby improving location flexibility.

## Description

This application claims priority to Chinese Patent Application No. 202210315238.8, filed with the China National Intellectual Property Administration on March 28, 2022 and entitled "WIRELESS COMMUNICATION METHOD AND APPARATUS", which is incorporated herein by reference in its entirety.

### TECHNICAL FIELD

Embodiments of this application relate to the communication field, and more specifically, to a wireless communication method and apparatus.

### BACKGROUND

Currently, a measurement signal may be received and sent between a network device and a terminal device, to locate the terminal device. However, different communication scenarios have different location requirements on the terminal device. For example, in a location scenario of vehicle navigation, absolute position information of the terminal device needs to be obtained. However, in an inter-vehicle distance alarm scenario, relative position information between vehicles is more important. Therefore, in different scenarios, how to locate the terminal device becomes a problem to be urgently resolved.

### SUMMARY

Embodiments of this application provide a wireless communication method and apparatus, to use different location manners in different scenarios, so as to improve location flexibility.

According to a first aspect, a wireless communication method is provided. The method may be performed by a first device or a chip in the first device. The method includes: The first device determines a location manner based on a location requirement on a first terminal device and a second terminal device, where the location manner includes at least one of the following manners: performing positioning through a first interface between the first terminal device and a corresponding access network device, performing positioning through a second interface between the second terminal device and a corresponding access network device, and performing positioning through a third interface between the first terminal device and the second terminal device. The first device sends first information according to the location manner, where the first information is used to perform positioning in the location manner.

Therefore, in this application, the first device may select a proper location manner or a proper location manner combination from at least one location manner based on a location requirement, to obtain required position information, so that different location manners can be used in different scenarios, thereby improving location flexibility.

With reference to the first aspect, in some manners of the first aspect, the location requirement includes obtaining at least one of the following position information: first position information of the first terminal device, second position information of the second terminal device, relative position information between the first terminal device and the second terminal device, relative distance information between the first terminal device and the second terminal device, and relative angle information between the first terminal device and the second terminal device.

Therefore, in this application, the first device may determine the location manner based on a type of the position information required by the location requirement. During requesting different position information, the first device may use different location manners, so that more applications can be supported.

With reference to the first aspect, in some manners of the first aspect, that a first device determines a location manner based on a location requirement includes: The first device determines the location manner based on first capability information, second capability information, and the location requirement. The first device determines the location manner based on the first capability information, the second capability information, and the location requirement. The first capability information indicates at least one of the following information: at least one location manner supported by the first terminal device, location precision corresponding to each of the at least one location manner supported by the first terminal device, a location algorithm corresponding to each of the at least one location manner supported by the first terminal device, a latency corresponding to each of the at least one location manner supported by the first terminal device, a type of an interface between the first terminal device and the second terminal device, a discovery mode supported by the first terminal device, and a communication capability of the interface between the first terminal device and the second terminal device.

The second capability information indicates at least one of the following information: at least one location manner supported by the second terminal device, location precision corresponding to each of the at least one location manner supported by the second terminal device, a location algorithm corresponding to each of the at least one location manner supported by the second terminal device, a latency corresponding to each of the at least one location manner supported by the second terminal device, the type of the interface between the second terminal device and the first terminal device, a discovery mode supported by the second terminal device, and the communication capability of the interface between the first terminal device and the second terminal device.

Therefore, in this application, the first device may determine the location manner based on capability information of the first terminal device and the second terminal device and the location requirement, to improve reliability of determining the location manner by the first device.

With reference to the first aspect, in some manners of the first aspect, before a first device determines a location manner, the method further includes: The first device sends a query message, where the query message is used to request the first capability information and/or the second capability information. The first device receives the first capability information and/or the second capability information that are/is in response to the query message.

With reference to the first aspect, in some manners of the first aspect, the location manner is performing positioning through the third interface. The location requirement includes at least one of the following: the relative position information, the relative distance information, and the relative angle information. The method further includes: When the positioning performed through the third interface fails, the first device determines that the location manner is performing positioning through the first interface and performing positioning through the second interface.

Therefore, in this application, when the positioning performed through the third interface fails, for example, when a distance between the first terminal device and the second terminal device is excessively long, the first device may obtain the required position information in another manner, to improve system reliability.

With reference to the first aspect, in some manners of the first aspect, the location requirement further includes at least one of the following information: a precision requirement, a latency requirement, and a QoS level requirement. The method further includes: The first device receives a location request message from a second device, where the location request message includes at least one of the following information: the location requirement, identification information of the first terminal device, identification information of the second terminal device, the first capability information, the second capability information, a location service identifier, trigger condition information, and action information. The location service identifier indicates a service that requests the position information, the trigger condition information indicates the first terminal device and/or the second terminal device to perform a first action when the position information meets a first condition, and the action information indicates the first action.

Therefore, in this application, the first device may determine the location manner based on various requirements indicated by the location requirement and various information in the location request message. This is applicable to more application scenarios.

With reference to the first aspect, in some manners of the first aspect, the first device is a third terminal device. That the first device sends first information according to the location manner includes: The first device sends the first information to the first terminal device and/or the second terminal device according to the location manner. Alternatively, the first device sends the first information to a location management network element according to the location manner.

With reference to the first aspect, in some manners of the first aspect, the first device is a location management network element. That the first device sends first information according to the location manner includes: The first device sends the first information to the first terminal device and/or the second terminal device according to the location manner.

With reference to the first aspect, in some manners of the first aspect, the first device is the first terminal device. That the first device sends first information according to the location manner includes: The first device sends the first information to the second terminal device. Alternatively, the first device sends the first information to a location management network element.

Therefore, in this application, a terminal device such as the first terminal device or the third terminal device, and a core network element such as the location management network element both may determine the location manner based on the location requirement, to improve system flexibility.

With reference to the first aspect, in some manners of the first aspect, the method further includes: The first device receives the position information. Alternatively, the first device receives measurement information corresponding to the position information. Alternatively, the first device receives measurement information corresponding to the position information, and the first device determines the position information based on the measurement information.

With reference to the first aspect, in some manners of the first aspect, the first device sends the measurement information or the position information.

Therefore, in this application, the first device may request the position information in the location requirement, or may request the measurement information corresponding to the position information, and the first device obtains the position information through calculation based on the measurement information, to improve system flexibility.

According to a second aspect, a wireless communication apparatus is provided. The apparatus includes a processing unit and a transceiver unit. The processing unit is configured to determine a location manner based on a location requirement on a first terminal device and a second terminal device, where the location manner includes at least one of the following manners: performing positioning through a first interface between the first terminal device and a corresponding access network device, performing positioning through a second interface between the second terminal device and a corresponding access network device, and performing positioning through a third interface between the first terminal device and the second terminal device. The transceiver unit is configured to send first information according to the location manner, where the first information is used to perform positioning in the location manner.

With reference to the second aspect, in some manners of the second aspect, the location requirement includes obtaining at least one of the following position information: first position information of the first terminal device, second position information of the second terminal device, relative position information between the first terminal device and the second terminal device, relative distance information between the first terminal device and the second terminal device, and relative angle information between the first terminal device and the second terminal device.

With reference to the second aspect, in some manners of the second aspect, the processing unit is specifically configured to determine the location manner based on first capability information, second capability information, and the location requirement. The first device determines the location manner based on the first capability information, the second capability information, and the location requirement. The first capability information indicates at least one of the following information: at least one location manner supported by the first terminal device, location precision corresponding to each of the at least one location manner supported by the first terminal device, a location algorithm corresponding to each of the at least one location manner supported by the first terminal device, a latency corresponding to each of the at least one location manner supported by the first terminal device, a type of an interface between the first terminal device and the second terminal device, a discovery mode supported by the first terminal device, and a communication capability of the interface between the first terminal device and the second terminal device.

The second capability information indicates at least one of the following information: at least one location manner supported by the second terminal device, location precision corresponding to each of the at least one location manner supported by the second terminal device, a location algorithm corresponding to each of the at least one location manner supported by the second terminal device, a latency corresponding to each of the at least one location manner supported by the second terminal device, the type of the interface between the second terminal device and the first terminal device, a discovery mode supported by the second terminal device, and the communication capability of the interface between the first terminal device and the second terminal device.

With reference to the second aspect, in some manners of the second aspect, before the processing unit is configured to determine the location manner, the transceiver unit is further configured to send a query message, where the query message is used to request the first capability information and/or the second capability information. The transceiver unit is further configured to receive the first capability information and/or the second capability information that are/is in response to the query message.

Therefore, in this application, the first device may select a proper location manner or a proper location manner combination from at least one location manner based on a location requirement, to obtain required position information, so that different location manners can be used in different scenarios, thereby improving location flexibility.

With reference to the second aspect, in some manners of the second aspect, the location manner is performing positioning through the third interface. The location requirement includes at least one of the following: the relative position information, the relative distance information, and the relative angle information. When the positioning performed through the third interface fails, the processing unit is further configured to determine that the location manner is performing positioning through the first interface and performing positioning through the second interface.

With reference to the second aspect, in some manners of the second aspect, the location requirement further includes at least one of the following information: a precision requirement, a latency requirement, and a QoS level requirement. The transceiver unit is further configured to receive a location request message from a second device, where the location request message includes at least one of the following information: the location requirement, identification information of the first terminal device, identification information of the second terminal device, the first capability information, the second capability information, a location service identifier, trigger condition information, and action information. The location service identifier indicates a service that requests the position information, the trigger condition information indicates the first terminal device and/or the second terminal device to perform a first action when the position information meets a first condition, and the action information indicates the first action.

With reference to the second aspect, in some manners of the second aspect, the apparatus is a third terminal device. The transceiver unit is specifically configured to send the first information to the first terminal device and/or the second terminal device according to the location manner. Alternatively, the transceiver unit is specifically configured to send the first information to a location management network element according to the location manner.

With reference to the second aspect, in some manners of the second aspect, the apparatus is a location management network element. The transceiver unit is specifically configured to send the first information to the first terminal device and/or the second terminal device according to the location manner.

With reference to the second aspect, in some manners of the second aspect, the apparatus is the first terminal device. The transceiver unit is specifically configured to send the first information to the second terminal device. Alternatively, the transceiver unit is specifically configured to send the first information to a location management network element.

With reference to the second aspect, in some manners of the second aspect, the transceiver unit is further configured to receive the position information. Alternatively, the transceiver unit is further configured to receive measurement information corresponding to the position information. Alternatively, the transceiver unit is further configured to receive measurement information corresponding to the position information, and the processing unit is further configured to determine the position information based on the measurement information.

With reference to the second aspect, in some manners of the second aspect, the transceiver unit is further configured to send the measurement information or the position information.

According to a third aspect, a wireless communication apparatus is provided. The apparatus is configured to perform the wireless communication method in any one of the possible implementations of the first aspect. Specifically, the apparatus may include a unit and/or a module, for example, a processing unit and/or a transceiver unit, configured to perform the wireless communication method in any one of the first aspect or the foregoing implementations of the first aspect.

In an implementation, the apparatus is a first device. When the apparatus is the first device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit disposed in a first device. When the apparatus is the chip, the chip system, or the circuit disposed in the first device, the transceiver unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

For example, the first device may be a first terminal device, a second terminal device, a third terminal device, or a location management network element.

According to a fourth aspect, a wireless communication apparatus is provided. The apparatus includes: a memory, configured to store a program; and at least one processor, configured to execute a computer program or instructions stored in the memory, to perform the wireless communication method in any one of the possible implementations of the first aspect.

In an implementation, the apparatus is a first device. In another implementation, the apparatus is a chip, a chip system, or a circuit disposed in a first device.

For example, the first device may be a first terminal device, a second terminal device, a third terminal device, or a location management network element.

According to a fifth aspect, a processor is provided. The processor is configured to perform the wireless communication method in any one of the possible implementations of the first aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer program product is provided. The computer program product includes a computer program (which may also be referred to as code or instructions). When the computer program is run, a computer is enabled to perform the wireless communication method in any one of the possible implementations of the first aspect.

According to a seventh aspect, a computer-readable storage medium is provided. The computer-readable storage medium stores a computer program (which may also be referred to as code or instructions). When the computer program is run on a computer, the computer is enabled to perform the method in any one of the possible implementations of the first aspect.

According to an eighth aspect, a chip system is provided. The chip system includes a processor, configured to invoke a computer program from a memory and run the computer program, so that a device on which the chip system is mounted performs the wireless communication method in any one of the possible implementations of the first aspect.

Optionally, in an implementation, a chip further includes the memory. The memory stores the computer program or instructions. The processor is configured to execute the computer program or the instructions stored in the memory. When the computer program or the instructions are executed, the processor is configured to perform the wireless communication method in any one of the possible implementations of the first aspect.

According to a ninth aspect, a communication system is provided. The communication system includes the apparatus in any one of the possible implementations of the second aspect.

### BRIEF DESCRIPTION OF DRAWINGS

FIG. 1 is a diagram of an application scenario applicable to an embodiment of this application;
FIG. 2 is a schematic flowchart of a wireless communication method according to an embodiment of this application;
FIG. 3 is a schematic flowchart of a method in which a first device is a first terminal device;
FIG. 4 is a schematic flowchart of a method in which a first device is an LMF network element;
FIG. 5 is a schematic flowchart of another method in which a first device is an LMF network element;
FIG. 6 is a schematic flowchart of still another method in which a first device is an LMF network element;
FIG. 7 is a schematic flowchart of a method in which a first device is a third terminal device;
FIG. 8 to FIG. 17 are schematic flowcharts of methods of possible PC5 ranging manners; and
FIG. 18 and FIG. 19 are diagrams of structures of possible apparatuses according to embodiments of this application.

### DESCRIPTION OF EMBODIMENTS

For ease of understanding of embodiments of this application, the following descriptions are first provided before embodiments of this application are described.

First, in embodiments of this application, "indication" may include a direct indication and an indirect indication, or may include an explicit indication and an implicit indication. Information indicated by a message (for example, a first request message described below) is referred to as to-be-indicated information. In a specific implementation process, the to-be-indicated information may be indicated in a plurality of manners, for example, but not limited to, may be directly indicated, for example, indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

Second, "first", "second", and various numbers in the following embodiments are only used for differentiation for ease of description, but are not intended to limit the scope of embodiments of this application, for example, for differentiation of different reference information.

Third, in the embodiments shown below, "pre-configuration" may be implemented by pre-storing corresponding code or a corresponding table in a device (for example, a terminal device), or in another manner that may indicate related information. A specific implementation thereof is not limited in this application.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The technical solutions provided in this application may be further applied to a future communication system, for example, a 6th generation mobile communication system. This is not limited in this application.

Usually, a conventional communication system supports a limited quantity of connections, and the connections are easy to implement. However, as communication technologies develop, a mobile communication system not only supports conventional communication, but also supports, for example, device to device (device to device, D2D) communication, machine to machine (machine to machine, M2M) communication, machine type communication (machine type communication, MTC), and vehicle to everything (vehicle to everything, V2X) communication (which may also be referred to as internet of vehicles communication) such as vehicle to vehicle (vehicle to vehicle, V2V) communication (which may also be referred to as vehicle to vehicle communication), vehicle to infrastructure (vehicle to infrastructure, V2I) communication (which may also be referred to as vehicle to infrastructure communication), vehicle to pedestrian (vehicle to pedestrian, V2P) communication (which may also be referred to as vehicle to person communication), and vehicle to network (vehicle to network, V2N) communication (which may also be referred to as vehicle to network communication).

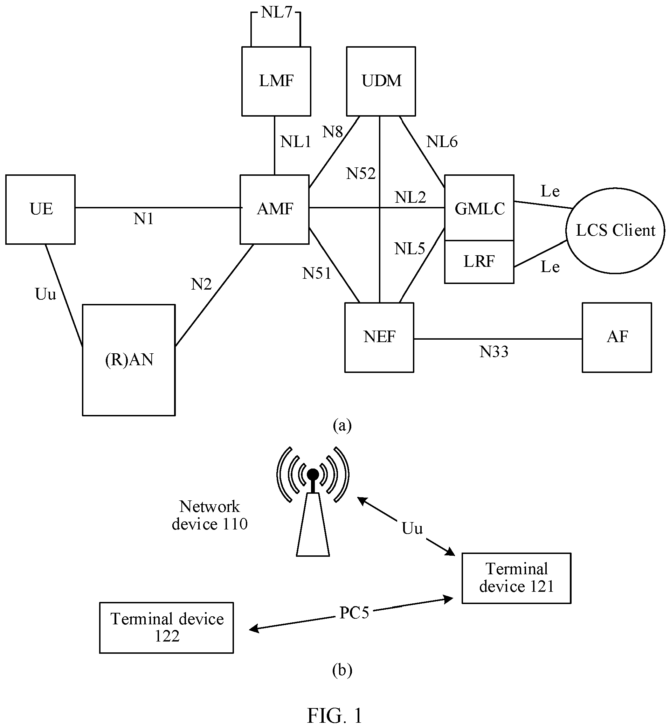

FIG. 1 is a diagram of an architecture of a communication system applicable to an embodiment of this application.

For example, as shown in (a) in FIG. 1, the architecture is, for example, a 5th generation system (the 5th generation system, 5GS). The 5GS includes a terminal device, a (radio) access network ((radio) access network, (R)AN) device, a mobility management network element, a location management network element, a data management (data management) network element, a gateway mobile location center, a user plane positioning center (supl positioning center), a user plane location center, an external client, a user plane network element, and some devices that are not shown in (a) in FIG. 1, for example, a network function repository function (network function repository function, NRF) device. The device in the 5GS may also be referred to as a 5G core network device.

The following briefly describes the devices shown in (a) in FIG. 1.
1. Terminal device: The terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device having a wireless connection function or a vehicle-mounted device. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a generic term for wearable devices such as glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands or smart jewelry for monitoring physical signs.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for interconnection between a person and a machine or between things.

2. (R)AN: The (R)AN provides a network access function for a terminal device and can use transmission tunnels of different quality based on user levels, service requirements, and the like. An access network may be an access network using different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements the access network function based on a wireless communication technology may be referred to as a radio access network (radio access network, RAN). The radio access network can manage radio resources, provide an access service for the terminal, and further complete forwarding of a control signal and user data between the terminal and a core network.

For example, the access network device includes but is not limited to a next generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmitting point (transmitting point, TP), a mobile switching center, and the like in 5G. Alternatively, the access network device may be a radio controller in a cloud radio access network (cloud radio access network, CRAN) scenario. Alternatively, the access network device may be a relay station, an access point, a vehicle-mounted device, a wearable device, a network device in a future 5G network, a network device in a future evolved PLMN network, or the like. A specific technology and a specific device form used by the radio access network device are not limited in embodiments of this application.

3. Mobility management network element: The mobility management network element is mainly used for mobility management, access management, and the like, such as user position update, registration with a network by a user, and user handover. For example, the mobility management network element may receive non-access stratum (non-access stratum, NAS) signaling (including mobility management (mobility management, MM) signaling and session management (session management, SM) signaling) of a terminal device and related signaling of an access network device (for example, N2 signaling at a base station granularity exchanged with the mobility management network element), to complete a user registration procedure, SM signaling forwarding, and the mobility management. The mobility management network element may be further configured to implement a function other than session management in a mobility management entity (mobility management entity, MME), for example, a lawful interception function or an access authorization (or authentication) function.

In a 5G communication system, the mobility management network element may be an access and mobility management function (access and mobility management function, mobility management) network element. In a future communication system such as a 6th generation (the 6th generation, 6G) communication system, the mobility management network element may still be a mobility management network element, or has another name. This is not limited in this application.

4. Location management network element: The location management network element is responsible for a position-related information service of a terminal device, including providing assistance information for the terminal device to perform position measurement, or processing position measurement information reported by the terminal device or a base station and calculating final coordinates, a position movement speed, and the like.

In a 5G communication system, the location management network element may be an LMF network element. In a future communication system such as a 6G communication system, the mobility management network element may still be an LMF network element, or has another name. This is not limited in this application.

5. Data management network element: The data management network element is configured to store subscriber data, such as subscription information and authentication/authorization information.

In a 5G communication system, the data management network element may be a unified data management (unified data management, UDM) network element. In a future communication system such as a 6G communication system, the unified data management may still be a UDM network element, or may have another name. This is not limited in this application.

6. Gateway mobile location center: The gateway mobile location center is responsible for interaction between a 5GC internal network element and an external LCS client. Alternatively, the GMLC may be a device that transfers position information.

In a 5G communication system, the gateway mobile location center may be a gateway mobile location center (gateway mobile location center, GMLC) network element. In a future communication system such as a 6G communication system, the unified data management may still be a GMLC network element, or may have another name. This is not limited in this application.

7. Application function (application function, AF): The application function is configured to perform application-affected data routing, wirelessly access a network exposure function network element, and interact with a policy framework for policy control, and the like.

In a future communication system, the application network element may still be an AF network element, or may have another name. This is not limited in this application.

8. Network exposure network element (network exposure function, NEF): The network exposure network element is used for connection and interaction between another network element inside a core network and an application server outside the core network, and may provide network information for the application server, or may provide information about the application server for the core network element.

In a 5G communication system, the network exposure network element may be a network exposure function network element. In a future communication system, the network exposure network element may still be an NEF network element, or may have another name. This is not limited in this application.

9. External client: The external client is configured to obtain position information of one or more UEs from a 3GPP network.

In a 5G communication system, the external client may be a location service (location service, LCS) client (client) network element. In a future communication system, the application network element may still be an LCS client network element, or may have another name. This is not limited in this application.

10. User plane network element: The user plane network element is used for packet routing and forwarding, quality of service (quality of service, QoS) processing of user plane data, and the like.

In a 5G communication system, the user plane network element may be a user plane function (user plane function, UPF) network element. In a future communication system, the user plane network element may still be a UPF network element, or may have another name. This is not limited in this application.

It may be understood that the network elements or the functions may be network elements in a hardware device, may be software functions running on dedicated hardware, or may be virtualized functions instantiated on a platform (for example, a cloud platform). In a possible implementation, the network elements or the functions may be implemented by one device, may be jointly implemented by a plurality of devices, or may be one functional module in one device. This is not specifically limited in embodiments of this application.

In the architecture shown in (a) in FIG. 1, the devices may communicate with each other through interfaces shown in the figure. As shown in (a) in FIG. 1, a Uu interface is a communication interface between the terminal device and the (R)AN, and is used for communication between the terminal device and the (R)AN, and the like. An N2 interface is a communication interface between the access network device and the mobility management network element, and is used for communication between the access network device and the mobility management network element, and the like. An NL1 interface is a communication interface between the mobility management network element and the location management network element, and is configured to send a location request message and a location response message, and the like. Relationships between other interfaces and the devices are shown in (a) in FIG. 1. For brevity, details are not enumerated herein.

In (a) in FIG. 1, Uu, N1, N2, N52, NL1, NL2, NL5, NL6, N33, Le, and the like are interface sequence numbers. For meanings of these interface sequence numbers, refer to meanings defined in standard protocols of a 3rd generation partnership project (3rd generation partnership project, 3GPP) and an open mobile alliance (open mobile alliance, OMA). This is not limited herein.

For example, (b) in FIG. 1 is a diagram of a scenario of an inter-device communication manner. In the scenario shown in (b) in FIG. 1, there are mainly two communication interfaces: a communication interface (Uu interface) between a terminal device 121 and a network device 110 (for example, the core network device in FIG. 1), and a communication interface (PC5 interface) between the terminal device 121 and a terminal device 122. The Uu interface is used for communication between the user equipment and a base station or a road side unit, and the PC5 interface is used for sidelink communication between the terminals. On the Uu interface, a link used by the terminal to send data to the base station is referred to as an uplink (uplink), and a link used by the terminal to receive data from the base station is referred to as a downlink (downlink). A communication interface between terminals is referred to as a PC5 interface. On the PC5 interface, a link for communicating data between the terminals is referred to as a sidelink (sidelink) or a straight-through link. A sidelink is usually used in a scenario in which direct communication may be performed between devices, such as device to device (device to device, D2D). In the scenario, data transmission between the devices does not need to be performed via a base station. Vehicle to everything (vehicle to everything, V2X) communication may be considered as a special case of D2D communication.

On the Uu interface, data and radio resource control (radio resource control, RRC) signaling are communicated between the terminal and the base station by using a radio bearer. A radio bearer used for data transmission is referred to as a data radio bearer (data radio bearer, DRB), and a bearer used for RRC signaling transmission is referred to as a signaling radio bearer (signaling radio bearer, SRB). A radio bearer includes a packet data convergence protocol (packet data convergence protocol, PDCP) entity and a radio link control (radio link control, RLC) bearer. An RLC bearer includes an RLC entity and a corresponding logical channel (Logical Channel, LCH). A configuration of the radio bearer is configurations of a PDCP entity, an RLC entity, and a logical channel of the radio bearer. The configuration of the radio bearer needs to meet a quality of service (quality of service, QoS) requirement of a service communicated by using the radio bearer. On the Uu interface, the radio bearer is configured by the network device for the terminal.

On the PC5 interface, data and RRC signaling also need to be communicated between the terminals by using a radio bearer. The radio bearer on the PC5 interface may be referred to as a sidelink radio bearer (sidelink radio bearer, SL RB). In a long term evolution (long term evolution, LTE) V2X system, radio bearers on a PC5 interface are respectively established by a transmit-end terminal and a receive-end terminal, and a configuration of the radio bearer is pre-defined in a standard or is determined by the transmit-end terminal and the receive-end terminal.

It should be noted that names of the devices and the communication interfaces between the devices in FIG. 1 are briefly described by using an example specified in a current protocol, but embodiments of this application are not limited to be applicable only to a currently known communication system. Therefore, standard names that appear when the current protocol is used as an example for description are functional descriptions. A specific name of a device, an interface, signaling, or the like is not limited in this application, only represents a function of the device, the interface, or the signaling, and may be correspondingly extended to another system, for example, a 2G, 3G, 4G, 5G, or future communication system.

The architecture applicable to embodiments of this application shown in FIG. 1 is only an example for description, and an architecture applicable to embodiments of this application is not limited thereto. Any architecture that can implement functions of the devices is applicable to embodiments of this application.

It should be further understood that the names are defined only for distinguishing between different functions, and should not constitute any limitation on this application. This application does not exclude a possibility that another name is used in the 5G network and another future network. For example, in a 6G network, a part or all of the devices may still use the term in 5G, or may use another name. The names of the interfaces between the devices in FIG. 1 are only examples, and the interfaces may have other names during specific implementation. This is not specifically limited in this application. In addition, names of messages (or signaling) communicated between the devices are only examples, and do not constitute any limitation on functions of the messages.

Currently, a location management network element in a core network can provide absolute position information of a terminal device. Embodiments of this application provide a wireless communication method and apparatus, to initiate positioning based on different requirements, so as to support more application scenarios. The following first describes wireless communication methods provided in embodiments of this application.

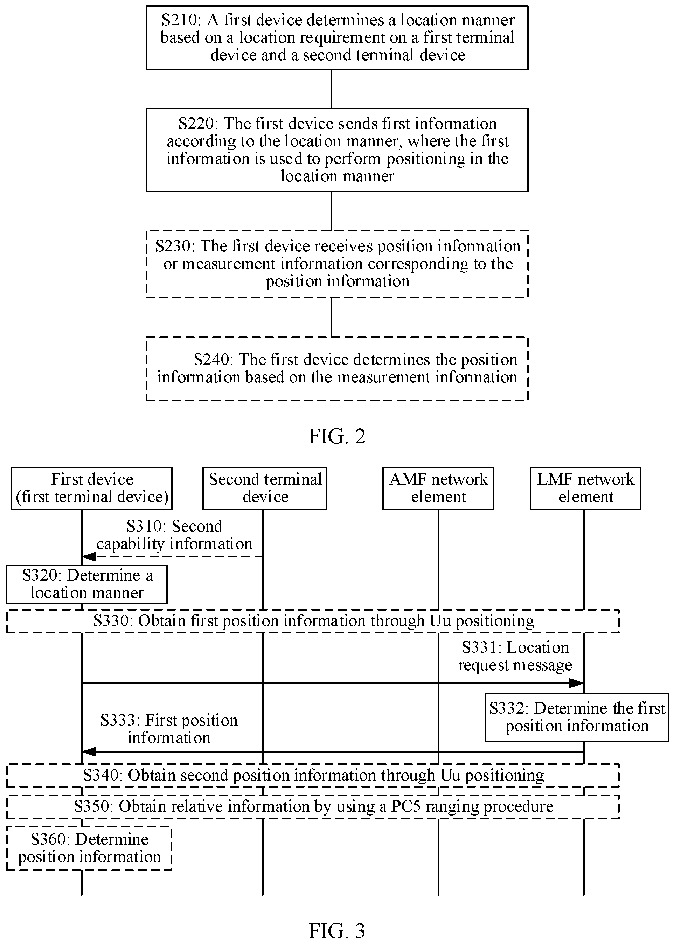

FIG. 2 is a schematic flowchart of a wireless communication method 200 according to an embodiment of this application.

S210: A first device determines a location manner based on a location requirement on a first terminal device and a second terminal device.

The location manner includes at least one of the following manners: performing positioning through a first interface between the first terminal device and a corresponding access network device, performing positioning through a second interface between the second terminal device and a corresponding access network device, and performing positioning through a third interface between the first terminal device and the second terminal device.

The first interface and the second interface may be the Uu interface between the terminal device and the access network device shown in (a) in FIG. 1, and the third interface may be the PC5 interface between the two terminal devices shown in (b) in FIG. 1.

Absolute position information of the first terminal device may be obtained by performing positioning through the first interface. A manner of performing positioning through the first interface may be performing positioning by using a resource between the terminal device and the network device, including but not limited to: 1. Control plane: A location management network element obtains, from the access network device via a mobility management network element, information measured by the access network device for locating the terminal device; and/or the location management network element obtains, from the terminal device via the mobility management network element and the access network device, information measured by the terminal device for locating the terminal device or a location result measured by the terminal device. 2. User plane: A location management network element obtains, from the terminal device through a user plane connection, information measured by the terminal device for locating the terminal device or a location result measured by the terminal device.

Similarly, absolute position information of the second terminal device may be obtained by performing positioning through the second interface. For a manner of performing positioning through the second interface, refer to the descriptions of performing positioning through the first interface.

Relative position information, relative distance information, or relative angle information between the first terminal device and the second terminal device may be obtained by performing positioning through the third interface. A manner of performing positioning through the third interface may be performing positioning by using a sidelink resource between the terminal devices, including but not limited to: 1. a ranging manner in which the terminal device obtains measurement information of the terminal devices, and calculates the position information based on the measurement information, where a core network element may not participate in the calculation; and 2. a ranging manner in which the terminal device obtains measurement information of the terminal devices, and sends the measurement information to a core network element, where the core network element participates in calculation to determine the position information.

Optionally, the location requirement may include obtaining at least one of the following position information: first position information of the first terminal device, second position information of the second terminal device, relative position information between the first terminal device and the second terminal device, relative distance information between the first terminal device and the second terminal device, and relative angle information between the first terminal device and the second terminal device.

It should be understood that the first position information and the second position information are absolute position information. Absolute position information may be absolute position coordinates of a terminal device or a relative position of the terminal device relative to a device with a determined position (for example, an access network device). A form of the absolute relative position information is not limited in this application.

The absolute position information may be obtained by performing positioning through an interface between the terminal device and the corresponding access network device. Relative position information, relative distance information, or relative angle information is obtained in the following manners: 1. obtaining by performing positioning directly through a PC5 interface between terminal devices; and 2. respectively performing positioning on two terminal devices through Uu interfaces, to obtain absolute position information of the two terminal devices, and then calculating relative position information, relative distance information, or relative angle information between the two terminal devices based on the absolute position information of the two terminal devices.

Different location manners may be used for different location requirements. For example, if the location requirement is obtaining at least one of the relative position information, the relative distance information, and the relative angle information between the two terminal devices, the first device may perform positioning in the two manners described in the previous paragraph.

Alternatively, for another example, if the location requirement is obtaining the absolute position information of the two terminal devices and at least one of the following relative information between the two terminal devices: the relative position information, the relative distance information, the relative angle information, and the like, the first device may use the following two manners: 1. respectively performing positioning on the two terminal devices through Uu interfaces to obtain the absolute position information of the two terminal devices, and then calculating the relative information between the two terminal devices based on the absolute position information of the two terminal devices; 2. performing positioning through a PC5 interface between the terminal devices to obtain the relative information, performing positioning on one of the terminal devices through a Uu interface to obtain absolute position information of the one of the terminal devices, and calculating absolute position information of the other terminal device based on the relative information and the absolute position information of the one of the terminal devices; and 3. respectively performing positioning on the two terminal devices through Uu interfaces to obtain the absolute position information of the two terminal devices, and then performing positioning through a PC5 interface between the terminal devices to obtain the relative information.

Alternatively, for another example, if the location requirement is obtaining absolute position information of one of the terminal devices and at least one of the following relative information between the two terminal devices: the relative position information, the relative distance information, the relative angle information, and the like, the first device may use the following two manners: 1. respectively performing positioning on the two terminal devices through Uu interfaces to obtain the absolute position information of the two terminal devices, and then calculating the relative information between the two terminal devices based on the absolute position information of the two terminal devices; and 2. performing positioning through a PC5 interface between the terminal devices to obtain the relative information, and performing positioning on one of the terminal devices through a Uu interface to obtain the absolute position information of the terminal device.

Optionally, the location requirement further includes at least one of the following: a precision requirement, a latency requirement, and a QoS level requirement. Then, the first device may determine the location manner based on the precision requirement, the latency requirement, or the QoS level requirement.

For example, if the location requirement is obtaining the relative information between the two terminal devices, and precision (for example, QoS precision), a latency (for example, a QoS latency), or a QoS level obtained in one the two manners of obtaining the relative information is different from that obtained in the other manner, the first device may select a manner that meets the precision requirement, the latency requirement, or the QoS level requirement to perform positioning. Alternatively, for another example, to improve precision, the first device may use both PC5 ranging and Uu positioning as the location manner. In addition, the precision may also be understood as accuracy of the measurement information or the position information.

Optionally, when the first device determines the location manner, the first device determines the location manner based on first capability information, second capability information, and the location requirement.

The first device determines the location manner based on the first capability information, the second capability information, and the location requirement. The first capability information indicates at least one of the following information: at least one location manner supported by the first terminal device, location precision corresponding to each of the at least one location manner supported by the first terminal device, a location algorithm corresponding to each of the at least one location manner supported by the first terminal device, a latency corresponding to each of the at least one location manner supported by the first terminal device, a type of an interface between the first terminal device and the second terminal device, a discovery mode supported by the first terminal device, and a communication capability of the interface between the first terminal device and the second terminal device.

The second capability information indicates at least one of the following information: at least one location manner supported by the second terminal device, location precision corresponding to each of the at least one location manner supported by the second terminal device, a location algorithm corresponding to each of the at least one location manner supported by the second terminal device, a latency corresponding to each of the at least one location manner supported by the second terminal device, the type of the interface between the second terminal device and the first terminal device, a discovery mode supported by the second terminal device, and the communication capability of the interface between the first terminal device and the second terminal device.

It should be understood that the first device may determine the location manner based on the capability information of the two terminal devices and the location requirement, the two terminal devices can perform positioning according to the location manner, and the location manner can also meet the location requirement. If the two terminal devices and the location requirement support a plurality of location manners, the first device may determine, based on a preset priority, a specific location manner to be used for positioning.

In a possible manner, the first device may receive a location request message, where the location request message is used to request the position information, and the location request message includes the location requirement, the first capability information, and the second capability information.

The first capability information and the second capability information in the location request message may be actively reported by the terminal device to the first device. For example, the terminal device may directly report the capability information to the first device, or the terminal device may actively report the capability information to another device, and the another device sends the capability information to the first device. Alternatively, the terminal device may send the capability information to the first device upon request. For example, the first device sends a query message to the terminal device, where the query message is used to request the capability information, and the terminal device reports the capability information to the first device upon request.

The location request message may further include at least one of the following information: identification information of the first terminal device, identification information of the second terminal device, a location service identifier, trigger condition information, and action information.

The identification information of the first terminal device and the identification information of the second terminal device may be used by the first device to determine specific terminal devices whose position information is to be obtained. It should be understood that when a second device requests to obtain position information of more than two terminal devices, the location request message may include identification information of the more than two terminal devices. In the following embodiments, an example in which position information of two terminal devices is requested is used for description. A manner of determining position information of more than two terminal devices is similar to that of the two terminal devices. For brevity, details are not described herein again.

A specific representation form of the identification information of the terminal device is not limited in embodiments of this application. For example, the identification information of the terminal device may be external identification information, for example, a generic public subscription identifier (generic public subscription identifier, GPSI) (for example, a mobile phone number in 5G) or a mobile subscriber integrated services digital network (mobile subscriber integrated services digital network, MSISDN) (for example, a mobile phone number in 4G). The core network element may convert the external identification information into internal identification information, for example, a subscriber permanent identifier (subscriber permanent identifier, SUPI) (a terminal SIM card identifier in 5G), an international mobile subscriber identity (international mobile subscriber identity, IMSI) (a terminal SIM card identifier in 4G), or a globally unique temporary UE identity (globally unique temporary UE identity, GUTI). Alternatively, the identification information of the terminal device in a first request message may be internal identification information. In other words, a representation form of identification information (for example, an external identifier) of the terminal device received by the core network element may be different from that of identification information (for example, an internal identifier) of the terminal device sent by the core network element.

The location service identifier (or location service type) indicates a service requesting the position information. For example, there is a mapping relationship between the location service identifier and the position information. The first device may determine, by using the location service identifier and the mapping relationship, which one or more of the absolute position information, the relative position information, the relative distance information, and the relative angle information are the position information that needs to be obtained based on the location requirement.

The trigger condition information indicates the first terminal device and/or the second terminal device to perform a first action when the position information meets a first condition, and the action information indicates the first action. For example, the trigger condition information may indicate that when a relative distance between two vehicles is less than a preset threshold, the two vehicles perform an alarm action. For another example, the trigger condition information may indicate that when a relative distance between a vehicle and a mobile phone is less than a preset threshold, the vehicle performs an unlock action.

S220: The first device sends first information according to the location manner, where the first information is used to perform positioning in the location manner.

Content of the first information is related to the location manner. For example, when the first device is a third terminal device different from the first terminal device and the second terminal device, the first device may send the first information to the first terminal device and/or the second terminal device, where the first information may be used to request the first terminal device and/or the second terminal device to initiate Uu positioning, to obtain the absolute position information of the first terminal device and/or the second terminal device, or the first information may be used to request the first terminal device and/or the second terminal device to initiate ranging (or PC5 ranging), to obtain the relative position information, the relative distance information, or the relative angle information between the first terminal device and the second terminal device. The first device may alternatively send the first information to the LMF network element, and the first information may be used to request the LMF network element to initiate Uu positioning or PC5 ranging. Alternatively, for another example, when the first device is the LMF network element, the first device may send the first information to the first terminal device and/or the second terminal device, where the first information may indicate the first terminal device and/or the second terminal device to perform Uu positioning, to obtain the absolute position information of the first terminal device and/or the second terminal device, or the first information may indicate the first terminal device and/or the second terminal device to perform ranging (or PC5 ranging). Alternatively, for another example, when the first device is the first terminal device or the second terminal device (the first terminal device is used as an example below), the first device may send the first information to the second terminal device, where the first information may be used for PC5 ranging, or the first device may send the first information to the LMF network element, where the first information may be used to request the LMF network element to initiate Uu positioning or PC5 ranging. Specific content of the first information is described in detail below with reference to FIG. 3 to FIG. 7.

Optionally, in S230, the first device receives the position information or the measurement information corresponding to the position information.

The position information is position information obtained by performing positioning in the location manner, the measurement information is measurement information obtained by performing positioning in the location manner, and the position information may be obtained through calculation based on the measurement information. For example, when the location manner is ranging through the PC5 interface, the measurement information may be a related parameter of a signal through the PC5 interface. When the location manner is ranging through the Uu interface, the measurement information may be a related parameter of a signal through the Uu interface.

When the first device receives the position information, the position information may be information obtained by another device by performing processing based on the measurement information. When the first device receives the measurement information, the method may further include step S240.

Optionally, in S240, the first device determines the position information based on the measurement information.

For example, if the measurement information includes transmission time of a signal communicated between the first terminal device and the second terminal device through the PC5 interface, the second device may obtain a relative distance through calculation based on the transmission time. A manner of determining the relative position information based on the measurement information is not limited in this application.

In embodiments of this application, a first device may be a first terminal device, a second terminal device, a third terminal device, or a location management network element (for example, the LMF network element shown in FIG. 1). The following describes in detail the method shown in FIG. 2 with reference to FIG. 3 to FIG. 7.

FIG. 3 is a schematic flowchart of a method in which a first device is a first terminal device.

Optionally, in S310, a second terminal device sends second capability information to the first terminal device, and correspondingly, the first terminal device receives the second capability information from the second terminal device.

For content of the second capability information, refer to the descriptions in step S210. Details are not described herein again.

S320: The first terminal device determines a location manner.

For example, the first terminal device determines the location manner based on a location requirement, or the first terminal device determines the location manner based on a location requirement, first capability information, and the second capability information. For a manner in which the first terminal device determines the location manner, refer to the descriptions in step S210. Details are not described herein again.

The location manner determined by the first terminal device includes any combination of the following: positioning through a first interface (a Uu positioning procedure corresponding to the first terminal device is used as an example below), positioning through a second interface (a Uu positioning procedure corresponding to the second terminal device is used as an example below), and positioning through a third interface (a PC5 ranging procedure corresponding to the first terminal device and the second terminal device is used as an example below).

When the location manner includes the Uu positioning procedure for the first terminal device, step S330 may be further performed in the method.

Optionally, in S330, the first terminal device obtains first position information through Uu positioning.

For example, the Uu positioning procedure for the first terminal device may include step S331 to step S333. Details are described below.

S331: The first terminal device sends a location request message to an LMF network element, and correspondingly, the LMF network element receives the location request message from the first terminal device.

The location request message is an example of the first information in step S220, and the location request message is used to request the first position information. Optionally, the location request message may include location indication information, and the location indication information indicates to obtain the first position information through Uu positioning.

S332: The LMF network element determines the first position information.

For example, the LMF network element may determine the first position information by using a transmission signal of a Uu interface. A specific manner of the Uu positioning is not limited in this application.

S333: The LMF network element sends the first position information to the first terminal device, and correspondingly, the first terminal device receives the first position information from the LMF network element.

For example, the LMF network element sends a location response message to the first terminal device in response to the location request message, where the location response message includes the first position information.

When the location manner includes the Uu positioning procedure for the second terminal device, step S340 may be further performed in the method.

Optionally, in S340, the first terminal device obtains second position information through Uu positioning.

A manner in which the first terminal device obtains the second position information through Uu positioning is similar to that described in step S331 to step S333. Details are not described herein again.

It should be understood that when the location manner includes the Uu positioning procedures for the first terminal device and the second terminal device, the location request message in step S331 may be used to request the first position information and the second position information. For example, the location request message includes identification information of the first terminal device and identification information of the second terminal device, and optionally, may further include location indication information, where the location indication information indicates to separately perform Uu positioning on the first terminal device and the second terminal device.

When the location manner includes the PC5 ranging procedure for the first terminal device and the second terminal device, step S350 may be further performed in the method.

Optionally, in S350, the first terminal device obtains relative information by using the PC5 ranging procedure.

The first terminal device may perform ranging in two manners to obtain the relative information.

### Manner 1:

The first terminal device sends a measurement signal to the second terminal device, where the measurement signal is used to obtain measurement information, and the measurement information is used to determine the relative information. The measurement signal is an example of the first information in step S220. The first terminal device and the second terminal device may record measurement information such as sending time, receiving time, an angle of a transmit antenna, or an angle of a receive antenna of the measurement signal, and determine the relative information based on the measurement information.

### Manner 2:

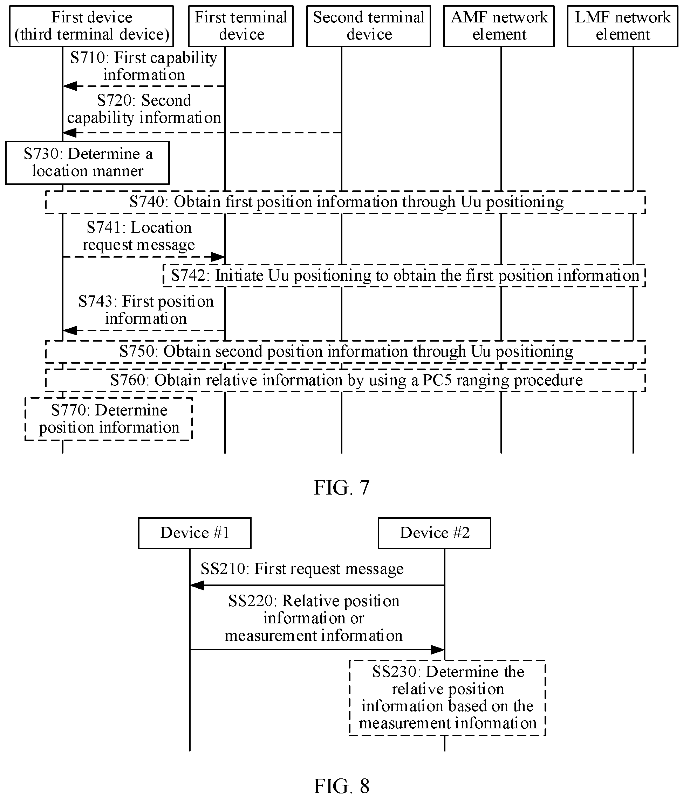

The first terminal device sends a first request message to the LMF network element, where the first request message is used to request the relative information or measurement information. The first request message is an example of the first information in step S220. The first request message may further include an identifier of the first terminal device and/or an identifier of the second terminal device, to indicate to request relative position information, relative distance information, relative angle information, or corresponding measurement information of the first terminal device and the second terminal device. Optionally, the first request message may further include location indication information, where the location indication information indicates to obtain the relative information or the measurement information in a PC5 ranging manner. A specific manner is described with reference to FIG. 8 to FIG. 17.

It should be understood that when the location manner further includes step S330 and step S340, the first request message is further used to request the first position information and the second position information. Optionally, the location request message further includes the location indication information, where the location indication information further indicates to obtain the first position information and the second position information through Uu positioning.

The first terminal device may determine, based on the first position information, the second position information, the relative position information, the relative distance information, or the relative angle information that is obtained in step S330 to step S350, position information required by the location requirement. For example, if the location requirement is obtaining the relative distance information, and the first terminal device determines to perform positioning in a manner of step S350, the first terminal device may obtain the required position information in step S350. If the first terminal device cannot obtain the required position information directly by using step S330 to step S350, the method may further include step S360.

Optionally, in S360, the first terminal device determines the position information.

For example, if the location requirement is obtaining the relative distance information, and the first terminal device determines to perform positioning in a manner of step S330 and step S340, the first terminal device may obtain the relative distance information through calculation based on the first position information and the second position information.

Alternatively, for another example, if the location requirement is obtaining high-precision relative distance information, and the first terminal device determines to perform positioning in a manner of step S330 to step S350, the first terminal device may obtain the high-precision relative distance information through calculation based on the first position information, the second position information, and the relative distance information that is obtained in step S350.

In a possible manner, the location requirement is obtaining the relative distance information, the relative angle information, or the relative position information, and the first terminal device determines, in step S320, to perform positioning in the PC5 ranging manner (step S350), but the positioning fails. For example, a distance between the first terminal device and the second terminal device is excessively long, and the relative information cannot be successfully obtained. In this case, the first terminal device may re-determine another location manner (step S330 and step S340) to obtain the required position information.

It should be understood that the foregoing uses an example in which the first terminal device determines the location manner, and a method in which the second terminal device determines a location manner is similar to that in the foregoing. In descriptions of all the following embodiments, unless otherwise specified, the first terminal device is used as an example. For brevity, details are not described again.

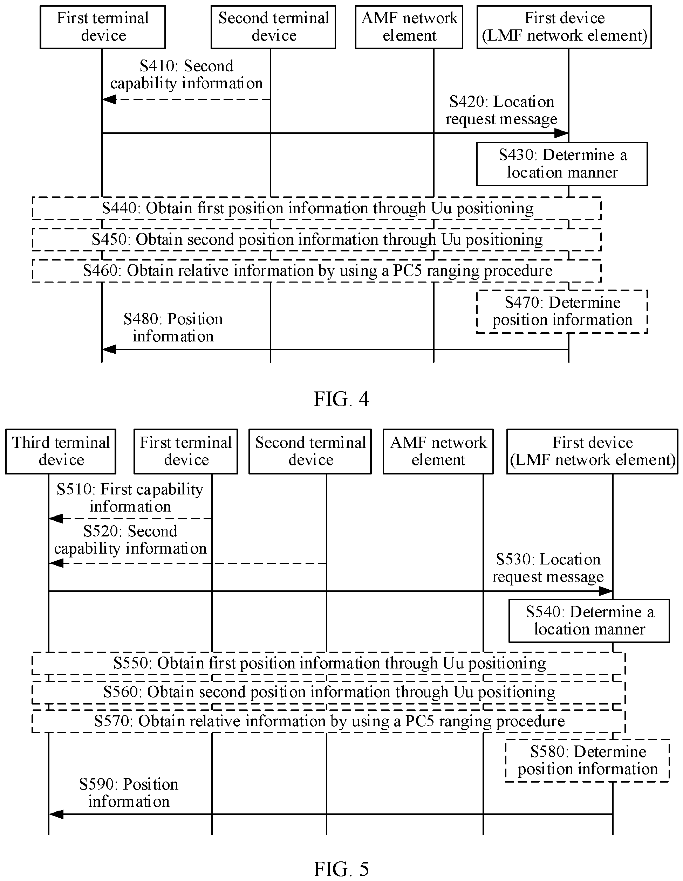

FIG. 4 is a schematic flowchart of a method in which a first device is an LMF network element.

Optionally, in S410, a second terminal device sends second capability information to a first terminal device, and correspondingly, the first terminal device receives the second capability information from the second terminal device.

The second terminal device may actively report the second capability information to the first terminal device, or may report the second capability information at a request of the first terminal device. For content of the second capability information, refer to the descriptions in step S210. Details are not described herein again.

S420: The first terminal device sends a location request message to an LMF network element, and correspondingly, the LMF network element receives the location request message from the first terminal device.

For example, the first terminal device sends the location request message to the LMF network element via a mobility management network element.

The location request message includes a location requirement. For content of the location requirement and the location request message, refer to the descriptions in step S210. Details are not described herein again.

For example, the location requirement, first capability information, and second capability information in the location request message are used by the LMF network element to determine a location manner.

S430: The LMF network element determines the location manner.

For example, the LMF network element determines the location manner based on the location requirement, or the LMF network element determines the location manner based on the location requirement, the first capability information, and the second capability information. For a manner in which the LMF network element determines the location manner, refer to the descriptions in step S210. Details are not described herein again.

The location manner determined by the LMF network element includes any combination of the following: positioning through a first interface (a Uu positioning procedure corresponding to the first terminal device is used as an example below), positioning through a second interface (a Uu positioning procedure corresponding to the second terminal device is used as an example below), and positioning through a third interface (a PC5 ranging procedure corresponding to the first terminal device and the second terminal device is used as an example below).

When the location manner includes the Uu positioning procedure for the first terminal device, step S440 may be further performed in the method.

Optionally, in S440, the LMF network element obtains first position information through Uu positioning.

For example, the LMF network element sends a request message to an access network device corresponding to the first terminal device and/or the first terminal device, where the request message is used to request to perform Uu positioning on the first terminal device, and the indication information is an example of the first information in step S220.

When the location manner includes the Uu positioning procedure for the second terminal device, step S450 may be further performed in the method.

Optionally, in S450, the LMF network element obtains second position information through Uu positioning.

For example, the LMF network element sends a request message to an access network device corresponding to the second terminal device and/or the second terminal device, where the request message is used to request to perform Uu positioning on the second terminal device, and the indication information is an example of the first information in step S220.

When the location manner includes the PC5 ranging procedure for the first terminal device and the second terminal device, step S460 may be further performed in the method.

Optionally, in S460, the LMF network element obtains relative information by using the PC5 ranging procedure.

For example, the LMF network element sends a location request message to the first terminal device, where the location request message is used to request relative position information, relative distance information, relative angle information, or corresponding measurement information, and the location request message is an example of the first information in step S220. The location request message may further include an identifier of the first terminal device and/or an identifier of the second terminal device, to indicate to request the relative position information, the relative distance information, the relative angle information, or the corresponding measurement information of the first terminal device and the second terminal device. Optionally, the location request message may further include location indication information, where the location indication information indicates to obtain the relative information or the measurement information in a PC5 ranging manner. A specific manner is described with reference to FIG. 8 to FIG. 17.

Optionally, in S470, the LMF network element determines position information.

A manner in which the LMF network element determines the position information is similar to the manner in which the first terminal device determines the position information in step S360. For brevity, details are not described herein again.

S480: The LMF network element sends the position information to the first terminal device, and correspondingly, the first terminal device receives the position information from the LMF network element.

For example, the LMF network element sends a location response message to the first terminal device in response to the location request message, where the location response message includes the position information.

FIG. 5 is a schematic flowchart of another method in which a first device is an LMF network element.

Optionally, in S510, a first terminal device sends first capability information to a third terminal device.

The first terminal device may actively report the first capability information to the third terminal device, or may report the first capability information at a request of the third terminal device. For content of the first capability information, refer to the descriptions in step S210. Details are not described herein again.

Optionally, in S520, a second terminal device sends the first capability information to the third terminal device.

The second terminal device may actively report second capability information to the third terminal device, or may report the second capability information at a request of the third terminal device. For content of the second capability information, refer to the descriptions in step S210. Details are not described herein again.

S530: The third terminal device sends a location request message to an LMF network element, and correspondingly, the LMF network element receives the location request message from the third terminal device.

For example, the third terminal device sends the location request message to the LMF network element via a mobility management network element.

The location request message includes a location requirement. For content of the location requirement and the location request message, refer to the descriptions in step S210. Details are not described herein again.

S540: The LMF network element determines a location manner.

Optionally, in S550, the LMF network element obtains first position information through Uu positioning.

Optionally, in S560, the LMF network element obtains second position information through Uu positioning.

Optionally, in S570, the LMF network element obtains relative information by using a PC5 ranging procedure.

Optionally, in S580, the LMF network element determines position information.

For descriptions of step S540 to step S580, refer to the descriptions in step S430 to step S470. For brevity, details are not described herein again.

Optionally, in S590, the LMF network element sends the position information to the third terminal device, and correspondingly, the third terminal device receives the position information from the LMF network element.

For example, the LMF network element sends a location response message to the third terminal device in response to the location request message, where the location response message includes the position information.

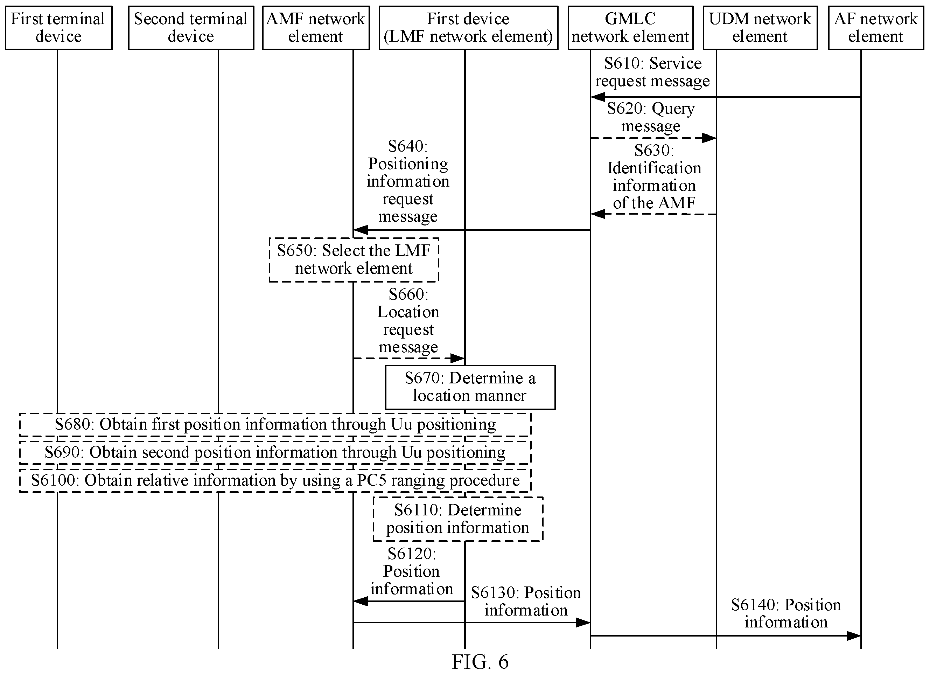

FIG. 6 is a schematic flowchart of still another method in which a first device is an LMF network element.

S610: An AF sends a service request message to a GMLC network element, and correspondingly, the GMLC network element receives the service request message from the AF network element.

Alternatively, an external client (client) sends a service request message to a GMLC network element. In the following embodiment, an example in which the AF network element sends the service request message to the GMLC network element is used for description.

The service request message may include at least one of the following information: identification information of a first terminal device, identification information of a second terminal device, a location service identifier, trigger condition information, action information, and a location requirement. For descriptions of the information, refer to the descriptions in step S210. Details are not described herein again.

Optionally, in S620, the GMLC network element sends a query message to a UDM network element, and correspondingly, the UDM network element receives the query message from the GMLC network element.

The query message (for example, an Nudm_UECM_get request) is used to request identification information of a mobility management network element corresponding to an executing terminal device. The query message may include identification information of the executing terminal device (the first terminal device).

Optionally, in S630, the UDM sends the identification information of the mobility management network element to the GMLC network element, and correspondingly, the GMLC network element receives the identification information of the mobility management network element from the UDM network element.

For example, the UDM network element sends a response message (for example, an Nudm_UECM_get response) to the GMLC network element in response to the query message, where the response message includes the identification information of the mobility management network element. Optionally, the response message may further include the identification information of the executing terminal device.

S640: The GMLC network element sends a provide positioning information request message to the mobility management network element, and correspondingly, the mobility management network element receives the provide positioning information request message from the GMLC network element.

The positioning information request message (for example, an Namf_Location_ProvidePositioninginfo Request) may include at least one of the following information: the identification information of the first terminal device, the identification information of the second terminal device, the location service identifier, the trigger condition information, the action information, and the location requirement. For descriptions of the information, refer to the descriptions in step S210. Details are not described herein again.

Optionally, in S650, the mobility management network element selects the LMF network element.

For example, the mobility management network element may select the LMF network element based on at least one of the following information: capability information and load information of the LMF network element, a PC5 RAT type of the first terminal device, a PC5 RAT type of the second terminal device, position information of the LMF network element, registered position information of the first terminal device, and registered position information of the second terminal device. A manner in which the mobility management network element selects the LMF network element configured to calculate relative position information is not limited in this application.

S660: The mobility management network element sends a location request message to the LMF network element, and correspondingly, the LMF network element receives the location request message from the mobility management network element.

The location request message includes the location requirement. For content of the location requirement and the location request message, refer to the descriptions in step S210. Details are not described herein again.

S670: The LMF network element determines a location manner.

Optionally, in S680, the LMF network element obtains first position information through Uu positioning.

Optionally, in S690, the LMF network element obtains second position information through Uu positioning.

Optionally, in S6100, the LMF network element obtains relative information by using a PC5 ranging procedure.

S6110: The LMF network element determines position information.

For step S670 to step S6110, refer to the descriptions in step S430 to step S470. For brevity, details are not described herein again.

S6120: The LMF network element sends the position information to the mobility management network element, and correspondingly, the mobility management network element receives the position information from the LMF network element.

For example, the LMF network element sends a location response message to the mobility management network element in response to the location request message, where the location response message includes the position information.

Optionally, in S6130, the mobility management network element sends the position information to the GMLC network element, and correspondingly, the GMLC network element receives the position information from the mobility management network element.

For example, the mobility management network element sends a provide positioning information response message to the GMLC network element in response to the provide positioning information request message, where the provide positioning information response message includes the position information.

Optionally, in S6140, the GMLC network element sends the position information to the AF network element, and correspondingly, the AF network element receives the position information from the GMLC network element.

For example, the GMLC network element sends a service response message to the AF network element in response to the service request message, where the service request message includes the position information.

FIG. 7 is a schematic flowchart of a method in which a first device is a third terminal device.

Optionally, in S710, a first terminal device sends first capability information to the third terminal device.

The first terminal device may actively report the first capability information to the third terminal device, or may report the first capability information at a request of the third terminal device. For content of the first capability information, refer to the descriptions in step S210. Details are not described herein again.

Optionally, in S720, a second terminal device sends the first capability information to the third terminal device.

The second terminal device may actively report second capability information to the third terminal device, or may report the second capability information at a request of the third terminal device. For content of the second capability information, refer to the descriptions in step S210. Details are not described herein again.

S730: The third terminal device determines a location manner.

For example, the third terminal device determines the location manner based on a location requirement, or the third terminal device determines the location manner based on a location requirement, the first capability information, and the second capability information. For a manner in which the third terminal device determines the location manner, refer to the descriptions in step S210. Details are not described herein again.

The location manner determined by the third terminal device includes any combination of the following: positioning through a first interface (a Uu positioning procedure corresponding to the first terminal device is used as an example below), positioning through a second interface (a Uu positioning procedure corresponding to the second terminal device is used as an example below), and positioning through a third interface (a PC5 ranging procedure corresponding to the first terminal device and the second terminal device is used as an example below).

When the location manner includes the Uu positioning procedure for the first terminal device, step S740 may be further performed in the method.

Optionally, in S740, the third terminal device obtains first position information through Uu positioning.

For example, the Uu positioning procedure for the first terminal device may include step S741 to step S743. Details are described below.

S741: The third terminal device sends a location request message to the first terminal device, and correspondingly, the first terminal device receives the location request message from the third terminal device.

The location request message is an example of the first information in step S220, and the location request message is used to request the first position information. Optionally, the location request message may include location indication information, and the location indication information indicates to obtain the first position information through Uu positioning.

S742: The first terminal device initiates the Uu positioning procedure to obtain the first position information.

For example, the first terminal device may obtain the first position information in a manner similar to that of step S331 to step S333.

S743: The first terminal device sends the first position information to the third terminal device, and correspondingly, the third terminal device receives the first position information from the third terminal device.

For example, the first terminal device sends a location response message to the third terminal device in response to the location request message, where the location response message includes the first position information.

When the location manner includes the Uu positioning procedure for the second terminal device, step S750 may be further performed in the method.

Optionally, in S750, the third terminal device obtains second position information through Uu positioning.

A manner in which the third terminal device obtains the second position information through Uu positioning is similar to that described in step S741 to step S743. Details are not described herein again.

When the location manner includes the PC5 ranging procedure for the first terminal device and the second terminal device, step S760 may be further performed in the method.

Optionally, in S760, the third terminal device obtains relative information by using the PC5 ranging procedure.

Optionally, the third terminal device may perform ranging in two manners to obtain the relative information.

### Manner 1:

For example, the third terminal device sends a location request message to the first terminal device, where the location request message is used to request relative position information, relative distance information, relative angle information, or corresponding measurement information, and the location request message is an example of the first information in step S220. The location request message may further include an identifier of the first terminal device and/or an identifier of the second terminal device, to indicate to request the relative position information, the relative distance information, the relative angle information, or the corresponding measurement information of the first terminal device and the second terminal device. Optionally, the location request message may further include location indication information, where the location indication information indicates to obtain the relative information or the measurement information in a PC5 ranging manner. A specific manner is described with reference to FIG. 8 to FIG. 17.

### Manner 2:

For example, the third terminal device sends a first request message to the LMF network element, where the first request message is used to request the relative information or measurement information. The first request message is an example of the first information in step S220. The first request message may further include an identifier of the first terminal device and/or an identifier of the second terminal device, to indicate to request relative position information, relative distance information, relative angle information, or corresponding measurement information of the first terminal device and the second terminal device. Optionally, the first request message may further include location indication information, where the location indication information indicates to obtain the relative information or the measurement information in a PC5 ranging manner. A specific manner is described with reference to FIG. 8 to FIG. 17.

Optionally, in S770, the third terminal device determines position information.

A manner in which the third terminal device determines the position information is similar to that in the descriptions of determining the position information in step S360. For brevity, details are not described herein again.

The foregoing describes a method in which a first device determines a location manner. With reference to FIG. 8 to FIG. 17, the following describes a manner of using relative position information, relative distance information, or relative angle information between a first terminal device and a second terminal device.

It should be noted that the following describes a PC5 ranging manner. If a part of the following procedure is the same as that in the foregoing, a meaning of the following procedure should be determined based on a function and internal logic of the following procedure, and does not constitute any limitation on an implementation process of embodiments of this application. For example, in some implementations, the first information in embodiments of this application and the following first request message are same information. In addition, based on internal logic, some steps in the foregoing embodiments and the following embodiments may be combined. For example, the first capability information in FIG. 2 to FIG. 7 may be combined with the following capability information in FIG. 8 to FIG. 17.

FIG. 8 is a schematic flowchart of a wireless communication method according to an embodiment of this application.

SS210: A device #2 sends a first request message to a device #1, and correspondingly, the device #1 receives the first request message from the device #2.

The first request message is used to request relative position information between a first terminal device and a second terminal device.

The relative position information may include at least one of the following: a relative position, a relative distance, and a relative angle.

Alternatively, the first request message is used to request measurement information of a first terminal device and a second terminal device, and the measurement information is used to determine relative position information.

The measurement information may be related to a measurement manner. For example, if the measurement manner is a ranging (ranging) manner or a sidelink ranging (sidelink ranging) manner, and positioning is performed between the first terminal device and the second terminal device through an interface (for example, a PC5 interface) between the first terminal device and the second terminal device, the measurement information may be obtained by measuring a related parameter of a signal of the interface, for example, a parameter that can be used to determine the relative position information, such as signal transmission time, a signal transmission periodicity, a signal sending angle, or a signal receiving angle.

Optionally, the first request message may include at least one of the following information: identification information of the first terminal device, identification information of the second terminal device, measurement requirement information, a measurement information type, measurement type information, trigger condition information, and action information.

The identification information of the first terminal device and the identification information of the second terminal device may be used by the device #1 to determine specific terminal devices whose relative position information is to be obtained. It should be understood that when the device #2 requests to obtain relative position information between more than two terminal devices, the first request message may include identification information of the more than two terminal devices. In the following embodiments, an example in which relative position information between two terminal devices is requested is used for description. A manner of determining relative position information between more than two terminal devices is similar to that of two terminal devices. For brevity, details are not described herein again.

A specific representation form of the identification information of the terminal device is not limited in embodiments of this application. For example, the identification information of the terminal device may be external identification information, for example, a generic public subscription identifier (generic public subscription identifier, GPSI) (for example, a mobile phone number in 5G) or a mobile subscriber integrated services digital network (mobile subscriber integrated services digital network, MSISDN) (for example, a mobile phone number in 4G). A core network element may convert the external identification information into internal identification information, for example, a subscriber permanent identifier (subscriber permanent identifier, SUPI) (a terminal SIM card identifier in 5G), an international mobile subscriber identity (international mobile subscriber identity, IMSI) (a terminal SIM card identifier in 4G), or a globally unique temporary UE identity (globally unique temporary UE identity, GUTI). Alternatively, the identification information of the terminal device in the first request message may be internal identification information. In other words, a representation form of identification information (for example, an external identifier) of the terminal device received by the core network element may be different from that of identification information (for example, an internal identifier) of the terminal device sent by the core network element.

The measurement requirement information indicates a response time requirement, a location precision requirement, a QoS level requirement, a location dimension requirement, and the like. For example, the response time requirement may indicate time, a latency, or a frequency needed for obtaining the relative position information or the measurement information, the location precision requirement may indicate precision of the relative distance, for example, less than or equal to 1 meter, and the location dimension requirement may indicate that the relative position information is of one-dimensional location, two-dimensional location, or three-dimensional location. Then, the device #1 may determine, based on the measurement requirement information, how to perform ranging/positioning. In addition, in embodiments of this application, the precision may also be understood as accuracy.

The measurement information type indicates that the first request message is used to request the measurement information or the relative position information. In other words, the measurement information type indicates that the first request message is used to request a sidelink ranging service, and the sidelink ranging service corresponds to the relative position information or the measurement information. Then, the device #1 may determine, based on the measurement type information, to perform ranging, and return the measurement information or the relative position information.

The measurement type information indicates a type of the relative position information, and the type of the relative position information means relative distance information, relative angle information, or relative position information. Then, the device #1 may determine, based on the measurement type information, specific parameters that need to be measured, to determine the relative position information.

The trigger condition information indicates the first terminal device and/or the second terminal device to perform a first action when the relative position information meets a first condition, and the action information indicates the first action. For example, the trigger condition information may indicate that when a relative distance between two vehicles is less than a preset threshold, the two vehicles perform an alarm action. For another example, the trigger condition information may indicate that when a relative distance between a vehicle and a mobile phone is less than a preset threshold, the vehicle performs an unlock action.

SS220: The device #1 sends the relative position information or the measurement information to the device #2 in response to the first request message, and correspondingly, the device #2 receives, from the device #1, the relative position information or the measurement information that is in response to the first request message.

It should be understood that, that the device #1 responds to the first request message means that the device #1 sends, based on content requested in the first request message, the requested content to the device #2. In other words, if the first request message is used to request the measurement information, the device #1 sends the measurement information to the device #2; or if the first request message is used to request the relative position information, the device #1 sends the relative position information to the device #2.

When the device #2 requests the measurement information and receives the device #1 from the device #1, the method 200 may further include step SS230.

Optionally, in SS230, the device #2 determines the relative position information based on the measurement information.

For example, if the measurement information includes transmission time of a signal communicated between the first terminal device and the second terminal device through the PC5 interface, the device #2 may obtain the relative distance through calculation based on the transmission time. A manner of determining the relative position information based on the measurement information is not limited in this application.

In embodiments of this application, the device #1 may be a first terminal device, a second terminal device, a third terminal device, a mobility management network element (for example, the mobility management network element shown in FIG. 1), or a gateway mobile location center network element (for example, the GMLC network element shown in FIG. 1). The device #2 may be the first terminal device, the second terminal device, the third terminal device, or an application function network element (for example, the AF network element shown in FIG. 1). The first terminal device, the second terminal device, and the third terminal device are different terminal devices.

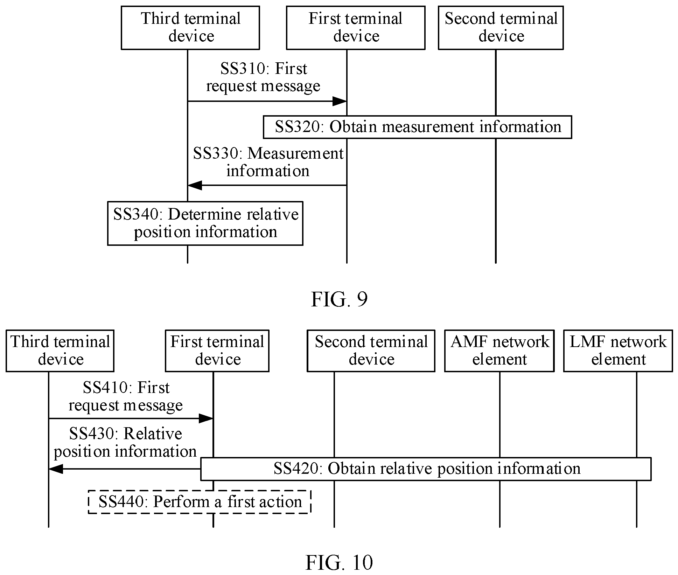

The following describes in detail the method shown in FIG. 2 with reference to FIG. 9 to FIG. 9.

FIG. 9 is a schematic flowchart of a communication method when a device #1 is a first terminal device and a device #2 is a third terminal device.

SS310: The third terminal device sends a first request message to the first terminal device, and correspondingly, the first terminal device receives the first request message from the third terminal device.

For example, the first request message is a measurement request message for requesting measurement information, and the third terminal device sends the measurement request message to the first terminal device through a PC5 interface between the third terminal device and the first terminal device.

For content of the first request message, refer to the descriptions in step SS210. Details are not described herein again.

SS320: The first terminal device and a second terminal device obtain the measurement information.

The first terminal device and the second terminal device may obtain the measurement information by performing sidelink ranging.

For example, the first terminal device and the second terminal device may receive and send a measurement reference signal to each other through a PC5 interface between the first terminal device and the second terminal device, and obtain the measurement information by recording, for example, a parameter such as time, a position, or an angle at which the reference signal is sent, or time, a position, or an angle at which the reference signal is received.

SS330: The first terminal device sends the measurement information to the third terminal device in response to the first request message, and correspondingly, the third terminal device receives, from the first terminal device, the measurement information that is in response to the first request message.

For example, the first terminal device sends a measurement response message that is in response to the measurement request message to the third terminal device through the PC5 interface, where the measurement response message carries the measurement information.

SS340: The third terminal device determines relative position information based on the measurement information.

For a manner of determining the relative position information based on the measurement information, refer to the descriptions in step SS230. Details are not described herein again.

Optionally, the third terminal device may report the relative position information to a related application server (for example, an AF network element, an AS, or an LCS client, and the AF network element is used as an example below for description).

For example, the third terminal device may send the relative position information to the AF network element via a UP.

Alternatively, for another example, the third terminal device may send a NAS message to a mobility management network element, where the NAS message includes the relative position information, and the NAS message may further include identification information of the AF network element and identification information of an NEF network element. If the NAS message does not include the identification information of the NEF network element, the mobility management network element may obtain the identification information of the NEF network element from context information of the third terminal device, or the mobility management network element may select an NEF network element for the third terminal device. Further, the mobility management network element may send the relative position information to the AF network element via the NEF network element.

Alternatively, for another example, the third terminal device may send a NAS message to a mobility management network element, where the NAS message includes the relative position information, and the NAS message may further include identification information of the AF network element and identification information of a GMLC network element. If the NAS message does not include the identification information of the GMLC network element, the mobility management network element may obtain the identification information of the GMLC network element from context information of the third terminal device, or the mobility management network element may select a GMLC network element for the third terminal device. Further, the mobility management network element may send the relative position information to the AF network element via the GMLC network element.

FIG. 10 is a schematic flowchart of another communication method when a device #1 is a first terminal device and a device #2 is a third terminal device.

SS410: The third terminal device sends a first request message to the first terminal device, and correspondingly, the first terminal device receives the first request message from the third terminal device.

For example, the first request message is a location request message for requesting relative position information, and the third terminal device sends the location request message to the first terminal device through a PC5 interface between the third terminal device and the first terminal device.

For content of the first request message, refer to the descriptions in step SS210. Details are not described herein again.

SS420: The first terminal device obtains the relative position information.

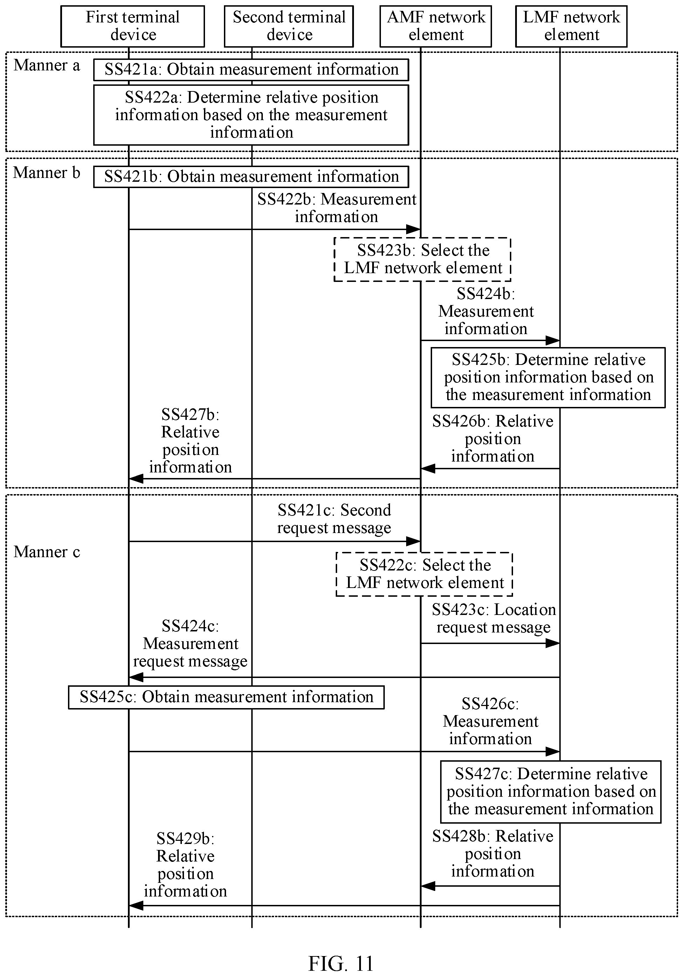

The first terminal device may perform ranging/positioning to obtain measurement information, and then obtain the relative position information through calculation; or the first terminal device may perform ranging/positioning to obtain measurement information, and then send the measurement information to an LMF network element, and the LMF network element calculates the relative position information; or the first terminal device may send a request message to an LMF network element based on the first request message, to request the LMF network element to calculate the relative position information. For a specific manner in which the first terminal device obtains the relative position information, refer to the following descriptions in FIG. 11.

SS430: The first terminal device sends the relative position information to the third terminal device in response to the first request message, and correspondingly, the third terminal device receives, from the first terminal device, the relative information that is in response to the first request message.

For example, the first terminal device sends a location response message that is in response to the location request message to the third terminal device through the PC5 interface, where the location response message carries the measurement information.

Optionally, when the first request message in the SS410 further includes trigger condition information and/or action information, the method may further include step SS440.

Optionally, in SS440, the first terminal device performs a first action when the relative position information meets a first condition.

The first condition may be a condition indicated by the trigger condition information or a preset condition, and the first action may be an action indicated by the action information or a preset action.

It should be understood that although not shown in FIG. 10, the trigger condition information in the first request message may further indicate a second terminal device to perform a second action (which may be the same as or different from the first action) when the relative position information meets a second condition (which may be the same as or different from the first condition). In other words, the trigger condition information and the action information in the first request message may indicate one or more terminal devices to perform a corresponding action. A terminal device that needs to perform an action may obtain the trigger condition information, the action information, and the relative position information via another terminal device or a core network element, and perform the corresponding action.

In the following, FIG. 11 is a schematic flowchart of a method in which a first terminal device obtains relative position information.

The first terminal device may obtain the relative position information in the following three manners.

### Manner a:

SS421a: The first terminal device and a second terminal device obtain measurement information.

For a manner in which the first terminal device and the second terminal device obtains the measurement information, refer to the descriptions in step SS320. Details are not described herein again.

SS422a: The first terminal device and the second terminal device obtain the relative position information.

For example, the first terminal device may obtain the relative position information through calculation based on the measurement information, or the second terminal device obtains the relative position information through calculation based on the measurement information and sends the relative position information to the first terminal device.

Therefore, in Manner a, the first terminal device may obtain the relative position information through calculation based on the measurement information.

### Manner b:

SS421b: The first terminal device and a second terminal device obtain measurement information.

For a manner in which the first terminal device and the second terminal device obtains the measurement information, refer to the descriptions in step SS320. Details are not described herein again.

SS422b: The first terminal device sends the measurement information to a mobility management network element, and correspondingly, the mobility management network element receives the measurement information from the first terminal device.

The measurement information is used by an LMF network element to determine the relative position information.

For example, the first terminal device may send a position calculation request message to the mobility management network element, where the position calculation request message is used to request to calculate the relative position information, and the calculation request message includes the measurement information. The position calculation request message may further include at least one of the following information: measurement type information, a measurement information type, measurement requirement information, measurement algorithm information, and a PC5 RAT type.

The measurement type information, the measurement information type, and the measurement requirement information are similar to that described in the first request message in step SS210. For brevity, details are not described herein again. The measurement algorithm information indicates a measurement algorithm corresponding to the measurement information, and the PC5 RAT type indicates a PC5 RAT used by the first terminal device to obtain the measurement information. The position calculation request message may further include other information that can assist the LMF network element in calculation. This is not specifically limited in this application.

Optionally, in SS423b, the mobility management network element selects the LMF network element.

For example, the mobility management network element may select the LMF network element based on at least one of the following information: capability information and load information of the LMF network element, a PC5 RAT type of the first terminal device, a PC5 RAT type of the second terminal device, position information of the LMF network element, registered position information of the first terminal device, and registered position information of the second terminal device. A manner in which the mobility management network element selects the LMF network element used to calculate the relative position information is not limited in this application.

SS424b: The mobility management network element sends the measurement information to the LMF network element, and correspondingly, the LMF network element receives the measurement information from the mobility management network element.

For example, the mobility management network element sends a position calculation request message to the LMF network element, where the position calculation request message includes the measurement information, and the position calculation request message sent by the mobility management network element may be an Nlmf_Location_DetermineLocation request (Nlmf_Location_DetermineLocation request) message. The position calculation request message may further include at least one of the following information: the measurement type information, the measurement information type, the measurement requirement information, the measurement algorithm information, and the PC5 RAT type. For descriptions of the information, refer to the descriptions in step SS422b.

SS425b: The LMF network element determines the relative position information based on the measurement information.

For a manner of determining the relative position information based on the measurement information, refer to the descriptions in step SS230. Details are not described herein again.

SS426b: The LMF network element sends the relative position information to the mobility management network element, and correspondingly, the mobility management network element receives the relative position information from the LMF network element.

For example, the LMF network element sends a position calculation response message to the mobility management network element in response to the position calculation request message, where the calculation response message includes the relative position information. The location calculation response message sent by the LMF network element may be an Nlmf_Location_DetermineLocation response (Nlmf_Location_DetermineLocation response) message.

SS427b: The mobility management network element sends the relative position information to the first terminal device, and correspondingly, the first terminal device receives the relative position information from the mobility management network element.

For example, the mobility management network element sends a position calculation response message to the first terminal device in response to the position calculation request message sent by the first terminal device, where the position calculation response message includes the relative position information.

Therefore, in Manner b, the first terminal device may send the measurement information to the LMF network element, and the LMF network element obtains the relative position information through calculation.

### Manner c:

SS421c: The first terminal device sends a second request message to a mobility management network element, and correspondingly, the mobility management network element receives the second request message from the first terminal device.

The second request message is used to request an LMF network element to determine the relative position information. In other words, the second request message is used to request the relative position information.

The second request message may include at least one of the following information: measurement type information, a measurement information type, and measurement requirement information. Receiving of the information is similar to that described in the first request message in step SS210. For brevity, details are not described herein again.

Optionally, in SS422c, the mobility management network element selects the LMF network element.

For descriptions of selecting the LMF network element by the mobility management network element, refer to the descriptions in step SS423b. For brevity, details are not described herein again.

SS423c: The mobility management network element sends a location request message to the LMF network element, and correspondingly, the LMF network element receives the location request message from the mobility management network element.

The location request message is used to request the LMF network element to determine the relative position information.

For example, the mobility management network element sends the location request message to the LMF network element based on the second request message. The location request message may be an Nlmf_Location_DetermineLocation request (Nlmf_Location_DetermineLocation request) message. The location request message may include at least one of the following information: the measurement type information, the measurement information type, and the measurement requirement information.

SS424c: The LMF network element sends a measurement request message to the first terminal device, and correspondingly, the first terminal device receives the measurement request message from the LMF network element.

The measurement request message is used to request measurement information.

The measurement request message may include at least one of the following information: the information type and the measurement type information. The information type indicates the first terminal device to return the measurement information (in other words, the first terminal device does not need to obtain the relative position information through calculation). The measurement type information is similar to that described in the first request message in step SS210. For brevity, details are not described herein again. For example, if the measurement type information indicates that the relative position information is a relative distance, the first terminal device returns, based on the measurement type information and the information type, measurement information used to determine the relative distance.

SS425c: The first terminal device and a second terminal device obtain the measurement information.

For a manner in which the first terminal device and the second terminal device obtains the measurement information, refer to the descriptions in step SS320. Details are not described herein again.

SS426c: The first terminal device sends the measurement information to the LMF network element, and correspondingly, the LMF network element receives the measurement information from the first terminal device.

For example, the first terminal device may send a position information provide message to the LMF network element in response to the measurement request message, where the position information provide message includes the measurement information. Optionally, the position information provide message further includes a measurement type.

SS427c: The LMF network element determines the relative position information based on the measurement information.

For a manner of determining the relative position information based on the measurement information, refer to the descriptions in step SS230. Details are not described herein again.

SS428c: The LMF network element sends the relative position information to the mobility management network element, and correspondingly, the mobility management network element receives the relative position information from the LMF network element.

For example, the LMF network element sends a location response message to the mobility management network element in response to the location request message, where the location response message includes the relative position information. The location response message sent by the LMF network element may be an Nlmf_Location_DetermineLocation response (Nlmf_Location_DetermineLocation response) message.

SS429c: The mobility management network element sends the relative position information to the first terminal device in response to the second request message, and correspondingly, the first terminal device receives, from the mobility management network element, the relative position information that is in response to the second request message.

Therefore, in Manner c, the first terminal device may request the LMF network element to determine the relative position information, and the LMF network element initiates a ranging procedure, determines the relative position information, and then sends the relative position information to the first terminal device.

The foregoing describes, by using a first terminal device as an example, three manners in which the first terminal device obtains relative position information. It should be understood that a second terminal device may also obtain the relative position information in a similar manner. For brevity, details are not described herein again.

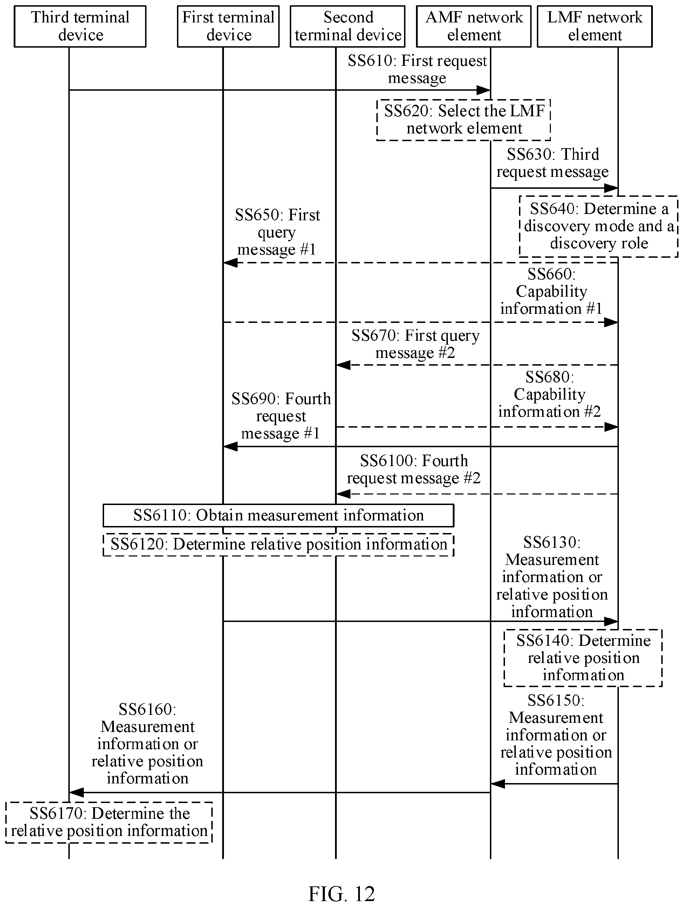

FIG. 12 is a schematic flowchart of a communication method when a device #1 is a mobility management network element and a device #2 is a third terminal device.

SS610: The third terminal device sends a first request message to a mobility management network element, and correspondingly, the mobility management network element receives the first request message from the third terminal device.

For content of the first request message, refer to the descriptions in step SS210. Details are not described herein again.

Optionally, in SS620, the mobility management network element selects an LMF network element.

For descriptions of selecting the LMF network element by the mobility management network element, refer to the descriptions in step SS423b. For brevity, details are not described herein again.

SS630: The mobility management network element sends a third request message to the LMF network element, and correspondingly, the LMF network element receives the third request message from the mobility management network element.

The third request message is used to request measurement information or relative position information.

The third request message may include at least one of the following information: identification information of a first terminal device, identification information of a second terminal device, measurement requirement information, a measurement information type, measurement type information, trigger condition information, and action information. For the information, refer to the descriptions in step SS210.

It should be understood that information requested by the third request message corresponds to that of the first request message. When the first request message is used to request the measurement information, the third request message is used to request the measurement information. When the first request message is used to request the relative position information, the third request message is used to request the relative position information.

Optionally, in SS640, the LMF network element determines a discovery mode and a discovery role.

The discovery mode is that the first terminal device discovers the second terminal device through a PC5 interface, or the second terminal device discovers the first terminal device through a PC5 interface. In other words, the discovery mode indicates the first terminal device and the second terminal device to perform discovery through the PC5 interface. Then, the first terminal device and the second terminal device may obtain the measurement information in the discovery mode. For example, the discovery mode may be a discovery mode A or a discovery mode B.

The discovery role indicates a role of the first terminal device in the discovery mode and a role of the second terminal device in the discovery mode. In other words, the discovery role indicates that the first terminal device in the discovery mode is a discoverer terminal device (discoverer UE), a discoveree terminal device (discoveree UE), an announcing terminal device (announcing UE), or a monitoring terminal device. Correspondingly, the second terminal device in the discovery mode is a discoverer terminal device, a discoveree terminal device, an announcing terminal device, or a monitoring terminal device.

The LMF network element may further query whether the first terminal device and the second terminal device support a ranging capability, and the method may further include step SS650 to step SS680. Alternatively, the first terminal device and the second terminal device may actively report a capability. In this case, the method may include step SS660 and step SS680.

Optionally, in SS650, the LMF network element sends a first query message #1 to the first terminal device, and correspondingly, the first terminal device receives the first query message #1 from the LMF network element.

The first query message #1 is used to request capability information #1, and the capability information #1 may include at least one of the following information: whether the first terminal device supports obtaining of measurement information, whether the first terminal device supports obtaining of relative position information, a discovery mode supported by the first terminal device, a capability (for example, PC5 discovery) of the first terminal device to communicate through the interface between the first terminal device and the second terminal device, a type (for example, a PC5 RAT type) of the interface, precision that is for obtaining the measurement information and that is supported by the first terminal device, and precision that is for obtaining the relative position information and that is supported by the first terminal device.

Optionally, in SS660, the first terminal device sends the capability information #1 to the LMF network element, and correspondingly, the LMF network element receives the capability information #1 from the first terminal device.

Further, the LMF network element may determine, based on the capability information #1, whether the first terminal device can meet the request of the first request message.

Optionally, in SS670, the LMF network element sends a first query message #2 to the second terminal device, and correspondingly, the second terminal device receives the first query message #2 from the LMF network element.

The first query message #2 is used to request capability information #2, and the capability information #2 may include at least one of the following information: whether the second terminal device supports obtaining of measurement information, whether the second terminal device supports obtaining of relative position information, a discovery mode supported by the second terminal device, a capability (for example, PCT discovery) of the second terminal device to communicate through the interface between the second terminal device and the second terminal device, the type (for example, the PC5 RAT type) of the interface, precision that is for obtaining the measurement information and that is supported by the second terminal device, and precision that is for obtaining the relative position information and that is supported by the second terminal device.

Optionally, in SS680, the second terminal device sends the capability information #2 to the LMF network element, and correspondingly, the LMF network element receives the capability information #2 from the second terminal device.

Further, the LMF network element may determine, based on the capability information #2, whether the second terminal device can meet the request of the first request message.

SS690: The LMF network element sends a fourth request message #1 to the first terminal device, and correspondingly, the first terminal device receives the fourth request message #1 from the LMF network element.

The fourth request message #1 is used to request to obtain the measurement information or the relative position information through the interface (for example, the PC5 interface) between the first terminal device and the second terminal device. Optionally, the fourth request message #1 includes at least one of the following information: ranging indication information, identification information of the third terminal device, the identification information of the second terminal device, the information type, the measurement type information, trigger condition information corresponding to the first terminal device, action information corresponding to the first terminal device, and the discovery role of the first terminal device in the discovery mode. The ranging indication information indicates the first terminal device to perform ranging, and the information type indicates the first terminal device to return the measurement information or the relative position information. For the measurement type information, the trigger condition information, and the action information, refer to the descriptions in step SS210.

It should be understood that when the first request message is used to request the measurement information, the fourth request message #1 is used to request the measurement information; and when the first request message is used to request the relative position information, the fourth request message #1 is used to request the measurement information or the relative position information. When the fourth request message #1 is used to request the measurement information, the LMF network element may calculate the relative position information; and when the fourth request message #1 is used to request the relative position information, the first terminal device and the second terminal device may obtain the relative position information.

It should be further understood that content included in the fourth request message #1 is determined based on a ranging manner and the discovery role of the first terminal device in the discovery mode. If the LMF network element determines, according to the ranging manner, that the LMF network element may further send a message for requesting measurement information or relative position information to the second terminal device, optionally, step SS6100 may be further performed.

Optionally, in SS6100, the LMF network element sends a fourth request message #2 to the second terminal device, and correspondingly, the second terminal device receives the fourth request message #2 from the LMF network element.

The fourth request message #2 is used to request the measurement information or the relative position information. Optionally, the fourth request message #2 includes at least one of the following information: the indication information, the identification information of the third terminal device, the identification information of the first terminal device, the information type, the measurement type information, trigger condition information corresponding to the second terminal device, action information corresponding to the second terminal device, and the discovery role of the second terminal device in the discovery mode. For the information, refer to the descriptions in step SS690.

It should be understood that when the first request message is used to request the measurement information, the fourth request message #2 is used to request the measurement information; and when the first request message is used to request the relative position information, the fourth request message #2 is used to request the measurement information or the relative position information. When the fourth request message #2 is used to request the measurement information, the LMF network element may calculate the relative position information; and when the fourth request message #2 is used to request the relative position information, the first terminal device and the second terminal device may obtain the relative position information.

It should be further understood that content included in the fourth request message #2 is determined based on the ranging manner and the discovery role of the second terminal device in the discovery mode. For example, when the second terminal device in the discovery mode is the discoveree terminal device, the fourth request message #4 may carry the indication information, the identification information of the third terminal device, the identification information of the first terminal device, the information type, and the measurement type information.

SS6110: The first terminal device and the second terminal device obtain the measurement information.

For a manner in which the first terminal device and the second terminal device obtains the measurement information, refer to the descriptions in step SS320. Details are not described herein again.

If the fourth request message is used to request the relative position information, the method further includes step SS6120.

Optionally, in SS6120, the first terminal device determines the relative position information based on the measurement information.

For a manner of determining the relative position information based on the measurement information, refer to the descriptions in step SS230. Details are not described herein again.

SS6130: The first terminal device sends the measurement information or the relative position information to the LMF network element in response to the fourth request message #1, and correspondingly, the LMF network element receives, from the first terminal device, the measurement information or the relative position information that is in response to the fourth request message #1.

If the first request message is used to request the relative position information, and the fourth request message is used to request the measurement information, the method may further include step SS6140.

Optionally, in SS6140, the LMF network element determines the relative position information based on the measurement information.

For a manner of determining the relative position information based on the measurement information, refer to the descriptions in step SS230. Details are not described herein again.

SS6150: The LMF network element sends the measurement information or the relative position information to the mobility management network element in response to the third request message, and correspondingly, the mobility management network element receives, from the LMF network element, the measurement information or the relative position information that is in response to the third request message.

SS6160: The mobility management network element sends the measurement information or the relative position information to the third terminal device in response to the first request message, and correspondingly, the third terminal device receives, from the mobility management network element, the measurement information or the relative position information that is in response to the first request message.

If the third terminal device receives the measurement information when the first request message is used to request the measurement information, the method may further include step SS6170.

Optionally, in SS6170, the third terminal device determines the relative position information based on the measurement information.

For a manner of determining the relative position information based on the measurement information, refer to the descriptions in step SS230. Details are not described herein again.

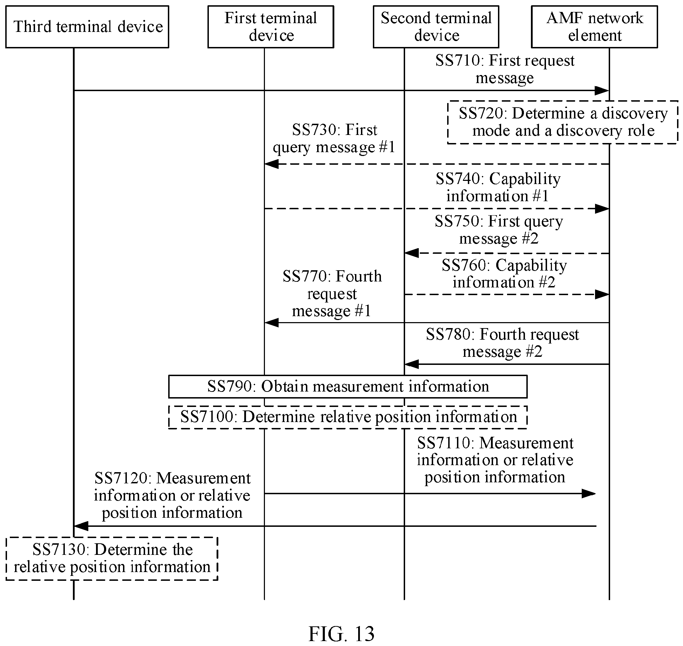

FIG. 13 is a schematic flowchart of another communication method when a device #1 is a mobility management network element and a device #2 is a third terminal device.

SS710: The third terminal device sends a first request message to the mobility management network element, and correspondingly, the mobility management network element receives the first request message from the third terminal device.

For content of the first request message, refer to the descriptions in step SS210. Details are not described herein again.

Optionally, in SS720, the mobility management network element determines a discovery mode and a discovery role.

A manner of determining the discovery mode and the discovery role is similar to that described in step SS640. Details are not described herein again.

The mobility management network element may further query whether a first terminal device and a second terminal device support a ranging capability, and the method may further include step SS730 to step SS760.

Optionally, in SS730, the mobility management network element sends a first query message #1 to the first terminal device, and correspondingly, the first terminal device receives the first query message #1 from the mobility management network element.

The first query message #1 is used to request capability information #1. For content of the first query message #1 and the capability information #1, refer to the descriptions in step SS650. Details are not described herein again.

Optionally, in SS740, the first terminal device sends the capability information #1 to the mobility management network element, and correspondingly, the mobility management network element receives the capability information #1 from the first terminal device.

Further, the mobility management network element may determine, based on the capability information #1, whether the first terminal device can meet a request of the first request message.

Optionally, in SS750, the mobility management network element sends a first query message #2 to the second terminal device, and correspondingly, the second terminal device receives the first query message #2 from the mobility management network element.

The first query message #2 is used to request capability information #2. For content of the first query message #2 and the capability information #2, refer to the descriptions in step SS670. Details are not described herein again.

Optionally, in SS760, the second terminal device sends the capability information #2 to the mobility management network element, and correspondingly, the mobility management network element receives the capability information #2 from the second terminal device.

Further, the mobility management network element may determine, based on the capability information #2, whether the second terminal device can meet the request of the first request message.

SS770: The mobility management network element sends a fourth request message #1 to the first terminal device, and correspondingly, the first terminal device receives the fourth request message #1 from the mobility management network element.

For content included in the fourth request message #1, refer to the descriptions in step SS690. Details are not described herein again.

It should be understood that the fourth request message #1 corresponds to the first request message. When the first request message is used to request measurement information, the fourth request message #1 is used to request the measurement information. When the first request message is used to request relative position information, the fourth request message #1 is used to request the relative position information.

It should be further understood that the content included in the fourth request message #1 is determined based on a ranging manner and a discovery role of the first terminal device in the discovery mode. If the mobility management network element determines, according to the ranging manner, that the mobility management network element may further send a message for requesting measurement information or relative position information to the second terminal device, optionally, step SS780 may be further performed.

Optionally, in SS780, the mobility management network element sends a fourth request message #2 to the second terminal device, and correspondingly, the second terminal device receives the fourth request message #2 from the mobility management network element.

For content included in the fourth request message #2, refer to the descriptions in step SS6100. Details are not described herein again.

It should be understood that the fourth request message #2 corresponds to the first request message. When the first request message is used to request the measurement information, the fourth request message #2 is used to request the measurement information. When the first request message is used to request the relative position information, the fourth request message #2 is used to request the relative position information.

SS790: The first terminal device and the second terminal device obtain the measurement information.

For a manner in which the first terminal device and the second terminal device obtains the measurement information, refer to the descriptions in step SS320. Details are not described herein again.

If the first request message is used to request the relative position information, and the fourth request message is used to request the relative position information, step SS7100 may be further performed in the method.

Optionally, in SS7100, the first terminal device determines the relative position information based on the measurement information.

For a manner of determining the relative position information based on the measurement information, refer to the descriptions in step SS230. Details are not described herein again.

SS7110: The first terminal device sends the measurement information or the relative position information to the mobility management network element in response to the fourth request message #1, and correspondingly, the mobility management network element receives, from the first terminal device, the measurement information or the relative position information that is in response to the fourth request message #1.

SS7120: The mobility management network element sends the measurement information or the relative position information to a third terminal device in response to the first request message, and correspondingly, the third terminal device receives, from the mobility management network element, the measurement information or the relative position information that is in response to the first request message.

If the third terminal device receives the measurement information when the first request message is used to request the measurement information, the method may further include step SS7130.

Optionally, in SS7130, the third terminal device determines the relative position information based on the measurement information.

For a manner of determining the relative position information based on the measurement information, refer to the descriptions in step SS230. Details are not described herein again.

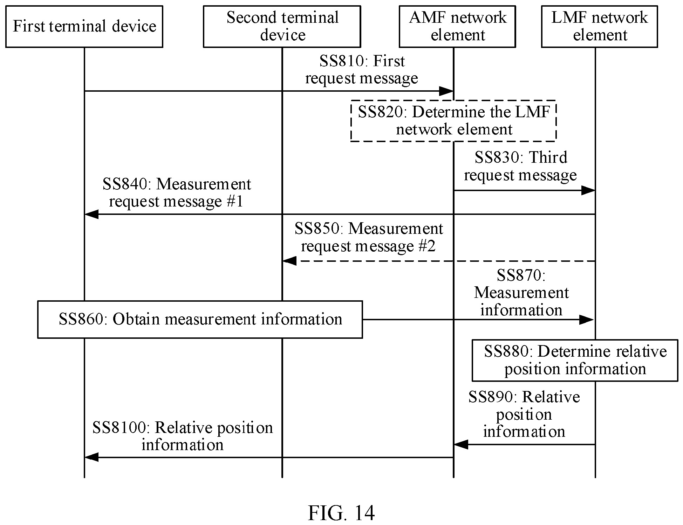

FIG. 14 is a schematic flowchart of a communication method when a device #1 is a mobility management network element and a device #2 is a first terminal device.

SS810: The first terminal device sends a first request message to the mobility management network element, and correspondingly, the mobility management network element receives the first request message from the first terminal device.

The first request message is used to request relative position information. For content included in the first request message, refer to the descriptions in step SS210. Details are not described herein again.

Optionally, in SS820, the mobility management network element selects an LMF network element.

SS830: The mobility management network element sends a third request message to the LMF network element, and correspondingly, the LMF network element receives the third request message from the mobility management network element.

The third request message is used to request the relative position information.

The third request message may include at least one of the following information: identification information of the first terminal device, identification information of a second terminal device, measurement requirement information, a measurement information type, measurement type information, trigger condition information, and action information. For the information, refer to the descriptions in step SS210.

SS840: The LMF network element sends a measurement request message #1 to the first terminal device, and correspondingly, the first terminal device receives the measurement request message #1 from the LMF network element.

The measurement request message #1 is used to request measurement information. Optionally, the measurement request message #1 includes indication information. The indication information indicates the first terminal device to perform ranging and return the measurement information.

It should be understood that content included in the measurement request message #1 is determined based on a ranging manner and a discovery role of the first terminal device in a discovery mode. If the LMF network element determines, according to the ranging manner, that the LMF network element may further send a message for requesting measurement information to the second terminal device, optionally, step SS850 may be further performed.

Optionally, in SS850, the LMF network element sends a measurement request message #2 to the second terminal device, and correspondingly, the second terminal device receives the measurement request message #2 from the LMF network element.

The measurement request message #2 is used to request the measurement information. Optionally, the measurement request message #2 includes indication information. The indication information indicates the second terminal device to perform ranging and return the measurement information.

It should be understood that content included in the measurement request message #2 is determined based on the ranging manner and a discovery role of the second terminal device in the discovery mode.

SS860: The first terminal device and the second terminal device obtain the measurement information.

For a manner in which the first terminal device and the second terminal device obtains the measurement information, refer to the descriptions in step SS320. Details are not described herein again.

SS870: The first terminal device sends the measurement information to the LMF network element in response to the measurement request message #1, and correspondingly, the LMF network element receives, from the first terminal device, the measurement information that is in response to the measurement request message #1.

SS880: The LMF network element determines the relative position information based on the measurement information.

For a manner of determining the relative position information based on the measurement information, refer to the descriptions in step SS230. Details are not described herein again.

SS890: The LMF network element sends the relative position information to the mobility management network element in response to the third request message, and correspondingly, the mobility management network element receives, from the LMF network element, the relative position information that is in response to the third request message.

SS8100: The mobility management network element sends the relative position information to the first terminal device in response to the first request message, and correspondingly, the first terminal device receives, from the mobility management network element, the relative position information that is in response to the first request message.

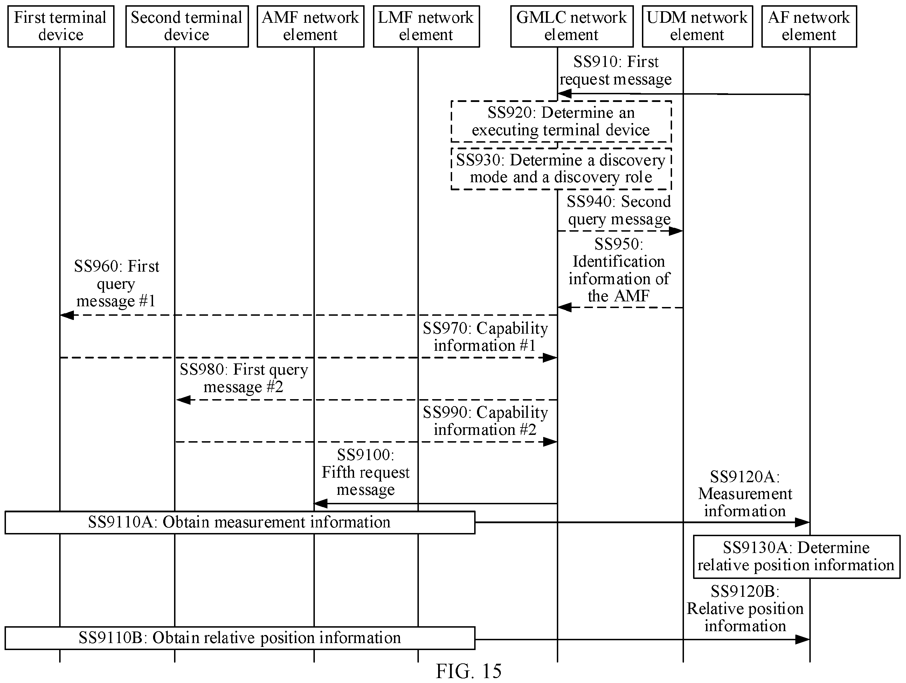

FIG. 15 is a schematic flowchart of a communication method when a device #1 is a GMLC network element and a device #2 is an AF network element.

SS910: The AF network element sends a first request message to the GMLC network element, and correspondingly, the GMLC network element receives the first request message from the AF network element.

For content of the first request message, refer to the descriptions in step SS210. Details are not described herein again.

Optionally, in SS920, the GMLC network element determines an executing terminal device.

The executing terminal device is a terminal device that communicates with a core network element in a ranging process (a process of obtaining measurement information through a PC5 interface), or a terminal device that communicates with a core network element to transmit measurement information or relative position information.

It should be understood that FIG. 15 uses an example in which a first terminal device is the executing terminal device. This does not constitute any limitation on this application. Either the first terminal device or a second terminal device may be used as the executing terminal device.

For example, the GMLC network element may randomly select the first terminal device or the second terminal device as the executing terminal device.

Alternatively, for another example, when the first request message includes trigger condition information and action information that correspond to the first terminal device, the GMLC network element may determine that a terminal device that executes the action information in the two terminal devices is the executing terminal device. For example, when the second terminal device corresponds to the trigger condition information and the action information, the GMLC network element determines that the second terminal device is the executing terminal device.

Alternatively, for another example, the first request message may include indication information indicating the executing terminal device, and then the GMLC network element may determine the executing terminal device based on the indication information.

Optionally, in SS930, the GMLC network element determines a discovery mode and a discovery role.

A manner of determining the discovery mode and the discovery role is similar to that described in step SS640. Details are not described herein again.

Optionally, in SS940, the GMLC network element sends a second query message to a UDM network element, and correspondingly, the UDM network element receives the second query message from the GMLC network element.

The second query message (for example, an Nudm - UECM _get request) is used to request identification information of a mobility management network element corresponding to the executing terminal device. The second query message may include identification information of the executing terminal device (the first terminal device).

Optionally, in SS950, the UDM sends the identification information of the mobility management network element to the GMLC network element, and correspondingly, the GMLC network element receives the identification information of the mobility management network element from the UDM network element.

For example, the UDM network element sends a second response message (for example, an Nudm_UECM_get response) to the GMLC network element in response to the second query message, where the second response message includes the identification information of the mobility management network element. Optionally, the second response message may further include the identification information of the executing terminal device.

The mobility management network element may further query whether the first terminal device and the second terminal device support a ranging capability, and the method may further include step SS960 to step SS990.

Optionally, in SS960, the GMLC network element sends a first query message #1 to the first terminal device, and correspondingly, the first terminal device receives the first query message #1 from the GMLC network element.

The first query message #1 is used to request capability information #1. For content of the first query message #1 and the capability information #1, refer to the descriptions in step SS650. Details are not described herein again.

Optionally, in SS970, the first terminal device sends the capability information #1 to the GMLC network element, and correspondingly, the GMLC network element receives the capability information #1 from the first terminal device.

Further, the GMLC network element may determine, based on the capability information #1, whether the first terminal device can meet a request of the first request message.

Optionally, in SS980, the GMLC network element sends a first query message #2 to the second terminal device, and correspondingly, the second terminal device receives the first query message #2 from the GMLC network element.

The first query message #2 is used to request capability information #2. For content of the first query message #2 and the capability information #2, refer to the descriptions in step SS670. Details are not described herein again.

Optionally, in SS990, the second terminal device sends the capability information #2 to the GMLC network element, and correspondingly, the GMLC network element receives the capability information #2 from the second terminal device.

Further, the GMLC network element may determine, based on the capability information #2, whether the second terminal device can meet the request of the first request message.

SS9100: The GMLC network element sends a fifth request message to the mobility management network element, and correspondingly, the mobility management network element receives the fifth request message from the GMLC network element.

The fifth request message is used to request the measurement information or the relative position information.

It should be understood that the fifth request message corresponds to the first request message. When the first request message is used to request the measurement information, the fifth request message is used to request the measurement information. When the first request message is used to request the relative position information, the fifth request message is used to request the relative position information.

When the fifth request message is used to request the measurement information, Manner A may be performed in the method. When the fifth request message is used to request the relative position information, Manner B may be performed in the method.

### Manner A:

SS980A: The mobility management network element obtains the measurement information.

The mobility management network element may obtain the measurement information in the manner of obtaining the measurement information in step SS620 to step SS6130 shown in FIG. 12.

Alternatively, the mobility management network element may obtain the measurement information by performing the method for obtaining the measurement information in step SS770 to step SS7110 shown in FIG. 13. Details are not described herein.

SS990A: The mobility management network element sends the measurement information to the AF network element in response to the first request message, and correspondingly, the AF network element receives, from the mobility management network element, the measurement information that is in response to the first request message.

SS9100A: The AF network element determines the relative position information based on the measurement information.

For a manner of determining the relative position information based on the measurement information, refer to the descriptions in step SS230. Details are not described herein again.

### Manner B:

SS980B: The mobility management network element obtains the relative position information.

The mobility management network element may obtain the relative position information in the manner of obtaining the relative position information in step SS620 to step SS6130 shown in FIG. 12.

Alternatively, the mobility management network element may obtain the relative position information by performing the method for obtaining the relative position information in step SS770 to step SS7110 shown in FIG. 13. Details are not described herein.

SS990B: The mobility management network element sends the relative position information to the AF network element in response to the first request message, and correspondingly, the AF network element receives, from the mobility management network element, the relative position information that is in response to the first request message.

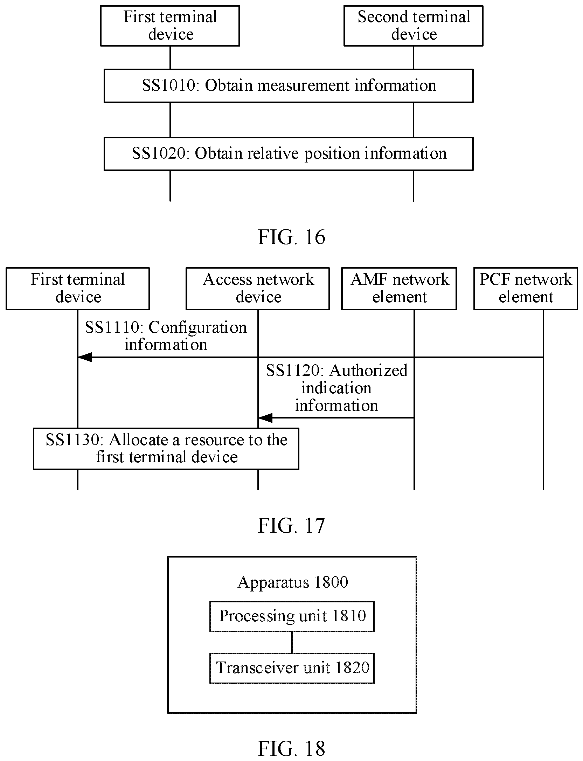

FIG. 2 to FIG. 15 respectively describe manners in which a third terminal device performs ranging by requesting a first terminal device or a mobility management network element, the first terminal device performs ranging by requesting the mobility management network element, and an AF network element performs ranging by requesting a GMLC network element. In a possible implementation, the first terminal device has a ranging requirement, and then the first terminal device may initiate a ranging procedure. This is described below with reference to FIG. 16.

FIG. 16 is a schematic flowchart of a wireless communication method according to an embodiment of this application.

SS1010: A first terminal device obtains measurement information of the first terminal device and a second terminal device.

The first terminal device obtains the measurement information of the first terminal device and the second terminal device through an interface (for example, a PC5 interface) between the first terminal device and the second terminal device.

The first terminal device may perform a ranging procedure. For example, configuration information of the first terminal device indicates the first terminal device to perform the ranging procedure at a preset time, or perform the ranging procedure when a preset condition is met. By way of example and not limitation, configuration information of a vehicle may indicate the vehicle to initiate a ranging procedure for a surrounding terminal device when a vehicle speed reaches a preset threshold.

For a manner in which the first terminal device and the second terminal device obtains the measurement information, refer to the descriptions in step SS320. Details are not described herein again.

SS1020: The first terminal device obtains relative position information between the first terminal device and the second terminal device based on the measurement information.

In a possible implementation, the first terminal device has a capability of calculating the relative position information, and the first terminal device determines the first terminal device based on the measurement information. In this case, the steps described in step SS421a and step SS422a in FIG. 11 may be performed in the method. Details are not described herein again.

In another possible implementation, the first terminal device may send the measurement information to an LMF network element, to request the LMF network element to calculate the relative position information. In this case, the steps described in step SS422b to step SS427b in FIG. 11 may be performed in the method. Details are not described herein again.

It should be understood that FIG. 16 is described by using an example in which the first terminal device initiates the ranging procedure. A manner in which the second terminal device initiates a ranging procedure is similar. For brevity, details are not described herein again.

FIG. 2 to FIG. 16 describe how to obtain relative position information between a first terminal device and a second terminal device. In embodiments of this application, before a first request message is sent in FIG. 2 to FIG. 15, and measurement information is obtained in FIG. 16, the first terminal device and the second terminal device may be further configured, so that the first terminal device and the second terminal device support ranging. This is described below with reference to FIG. 17.

FIG. 17 is a schematic flowchart of a method for configuring a first terminal device.

SS1110: A PCF network element sends configuration information to the first terminal device, and correspondingly, the first terminal device receives the configuration information from the PCF network element.

The first configuration information (for example, UE SL ranging parameters provision) includes at least one of the following information: authorized measurement type information, an authorized measurement parameter, an authorized measurement role, an identifier of a user authorized to use relative position information, an authorized discovery mode, an authorized discovery role, measurement mapping information, trigger condition information, and action information.

Measurement authorization information indicates that the first terminal device supports obtaining of the relative position information through an interface between the first terminal device and another terminal device, or indicates that the first terminal device supports ranging through a PC5 interface. For example, the measurement authorization information may indicate that the first terminal device supports obtaining of a relative distance, a relative angle, and/or a relative position between the first terminal device and the another terminal device through the PC5 interface.

The authorized measurement parameter (for example, an authorized QoS parameter) indicates at least one of the following parameters: a periodicity, precision, a latency, and bandwidth. Then, the first terminal device may perform measurement by using the QoS parameter.

The authorized discovery mode indicates a mode in which discovery or being discovered through the interface is supported.

The authorized ranging role indicates a measurement role during obtaining the relative position information. For example, the ranging role indicates that the first terminal device is a target terminal device (target UE), a reference terminal device (reference UE), or an assistance terminal device (assistance UE).

The reference terminal device is a terminal device that determines a reference plane or a reference direction in a service-based ranging and sidelink positioning process. The target terminal device is a terminal device that measures a distance, a direction, and/or a position based on the reference plane, the reference direction, and/or a position of the reference terminal device in the service-based ranging and sidelink positioning process. The assistance terminal device is a terminal device that provides assistance for direct ranging or sidelink positioning when the direct ranging or sidelink positioning between the reference terminal device and the target terminal device is not supported. In addition, in a same ranging or sidelink positioning procedure, each participating terminal device may be used as a reference terminal device or a target terminal device, and roles of participating terminal devices may be exchanged.

The authorized discovery mode indicates that the first terminal device supports discovery or being discovered through the PC5 interface, and the authorized discovery role indicates that the first terminal device is a discoverer terminal device or a discoveree terminal device. For example, the authorized discovery mode indicates that the first terminal device supports being discovered by a second terminal device through the PC5 interface, and the first terminal device is the discoveree terminal device, or that the first terminal device supports discovery of a second terminal device through the PC5 interface, and the first terminal device is the discoverer terminal device.

The measurement mapping information indicates a mapping relationship between a reference message (or a reference signal) used to obtain the relative position information and a destination layer 2 identifier. The measurement mapping information may be used to assist in using the ranging.

The trigger condition information indicates the first terminal device to perform a first action when the relative position information meets a first condition, and the action information indicates the first action. For example, the trigger condition information may indicate that when a relative distance between two vehicles is less than a preset threshold, the two vehicles perform an alarm action. For another example, the trigger condition information may indicate that when a relative distance between a vehicle and a mobile phone is less than a preset threshold, the vehicle performs an unlock action.

SS1120: An AFM network element sends authorized indication information to an access network device, and correspondingly, the access network device receives the authorized indication information from the mobility management network element.

The authorized indication information indicates that the first terminal device supports using the ranging through the PC5 interface.

The authorized indication information may include at least one of the following information: the authorized measurement parameter and the ranging role. For the authorized measurement parameter, refer to the descriptions in step SS1110. Details are not described herein again. The ranging role indicates a role of the first terminal device during using the ranging. For example, the ranging role indicates that the first terminal device is the target terminal device (target UE), the reference terminal device (reference UE), or the assistance terminal device (assistance UE).

SS1130: The access network device allocates, to the first terminal device based on the authorized indication information, a resource used for the ranging.

Further, the first terminal device may use the resource to perform the ranging process shown in FIG. 14 and FIG. 15.

It should be understood that FIG. 16 uses an example of configuring the configuration information and allocating the resource to the first terminal device. A process of configuring configuration information and allocating a resource to the second terminal device is similar to that in the example. For brevity, details are not described herein again. Further, the first terminal device may use the resource to perform the ranging process shown in FIG. 14 and FIG. 15.

It should be understood that the specific examples shown in FIG. 3 to FIG. 17 in embodiments of this application are only intended to help a person skilled in the art better understand embodiments of this application, but are not intended to limit the scope of embodiments of this application. It should be further understood that sequence numbers of the foregoing processes do not mean execution sequences. The execution sequences of the processes should be determined based on functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a network element in an existing network architecture is mainly used as an example for description. It should be understood that a specific form of the network element is not limited in embodiments of this application. For example, all network elements that can implement a same function in the future are applicable to embodiments of this application.

It may be understood that, in the foregoing method embodiments, methods and operations implemented by a network device (for example, the network elements) may alternatively be implemented by a component (for example, a chip or a circuit) that may be used in the network device.

The foregoing describes in detail the information obtaining method provided in embodiments of this application with reference to FIG. 2 to FIG. 17. The foregoing information obtaining method is mainly described from a perspective of interaction between the network elements. It may be understood that to implement the foregoing functions, each network element includes a corresponding hardware structure and/or software module for performing each function.

A person skilled in the art should be able to aware that, in combination with units and algorithm steps of the examples described in embodiments disclosed in this specification, this application may be implemented by hardware or a combination of hardware and computer software. Whether a function is performed by hardware or hardware driven by computer software depends on a particular application and a design constraint of the technical solutions. A person skilled in the art may use different methods to implement the described functions for each specific application. However, it should not be considered that this implementation goes beyond the scope of this application.

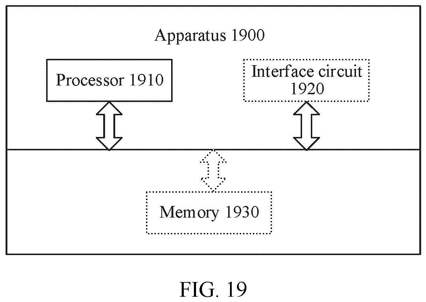

FIG. 18 and FIG. 19 are diagrams of structures of possible communication apparatuses according to embodiments of this application. These communication apparatuses may be configured to implement functions of the first device, the second device, the LMF network element, the first terminal device, and the access network device in the foregoing method embodiments, and therefore can also implement beneficial effects of the foregoing method embodiments. In embodiments of this application, the communication apparatus may be a first device, a second device, an LMF network element, a first terminal device, or an access network device, or may be a module (such as a chip) in the first device, the second device, the LMF network element, the first terminal device, or the access network device.

As shown in FIG. 18, a communication apparatus 1800 includes a processing unit 1810 and a transceiver unit 1820. The communication apparatus 1800 is configured to implement a function of the access network device in the method embodiments shown in FIG. 2 to FIG. 17. Alternatively, the communication apparatus 1800 may include a module configured to implement any function or operation of the access network device in the method embodiments shown in FIG. 2 to FIG. 17. The module may be completely or partially implemented by using software, hardware, firmware, or any combination thereof.

When the communication apparatus 1800 is configured to implement a function of the first device in the method embodiments shown in FIG. 2 to FIG. 17, the processing unit 1810 is configured to determine a location manner based on a location requirement on the first terminal device and a second terminal device, where the location manner includes at least one of the following manners: performing positioning through a first interface between the first terminal device and a corresponding access network device, performing positioning through a second interface between the second terminal device and a corresponding access network device, and performing positioning through a third interface between the first terminal device and the second terminal device. The transceiver unit 1820 is configured to send first information according to the location manner, where the first information is used to perform positioning in the location manner.

Therefore, in this application, the first device may select a proper location manner or a proper location manner combination from at least one location manner based on a location requirement, to obtain required position information, so that different location manners can be used in different scenarios, thereby improving location flexibility.

For more detailed descriptions of the processing unit 1810 and the transceiver unit 1820, directly refer to the related descriptions in the method embodiments shown in FIG. 2 to FIG. 10. Details are not described herein again.

As shown in FIG. 19, a communication apparatus 1900 includes a processor 1910 and an interface circuit 1920. The processor 1910 and the interface circuit 1920 are coupled to each other. It may be understood that the interface circuit 1920 may be a transceiver or an input/output interface. Optionally, the communication apparatus 1900 may further include a memory 1930, configured to store instructions executed by the processor 1910, store input data required by the processor 1910 to run the instructions, or store data generated after the processor 1910 runs the instructions.

When the communication apparatus 1900 is configured to implement the method shown in FIG. 2 to FIG. 6, the processor 1910 is configured to implement a function of the processing unit 1810, and the interface circuit 1920 is configured to implement a function of the transceiver unit 1820 or functions of the transceiver unit 1820 and the processing unit 1810.

When the communication apparatus is a chip used in an access network device, the chip in the access network device implements a function of the access network device in the foregoing method embodiments. The chip in the access network device receives information from another module (for example, a radio frequency module or an antenna) in the access network device, where the information is sent by another network element to the access network device. Alternatively, the access network device chip sends information to another module (for example, a radio frequency module or an antenna) in another network element, where the information is sent by the access network device to the another network element.

When the communication apparatus is a chip used in a first device, the chip in the first device implements a function of the first device in the foregoing method embodiments. The chip in the first device receives information from another module (for example, a radio frequency module or an antenna) in the first device, where the information is sent by another network element to the first device. Alternatively, the chip in the first device sends information to another module (for example, a radio frequency module or an antenna) in another network element, where the information is sent by the first device to the another network element.

When the communication apparatus is a chip used in an LMF network element, the chip in the LMF network element implements a function of the LMF network element in the foregoing method embodiment. The chip in the LMF network element receives information from another module (for example, a radio frequency module or an antenna) in the LMF network element, where the information is sent by another network element to the LMF network element. Alternatively, the LMF network element chip sends information to another module (for example, a radio frequency module or an antenna) in another network element, where the information is sent by the LMF network element to the another network element.

When the communication apparatus is a chip used in a second device, the chip in the second device implements a function of the second device in the foregoing method embodiments. The chip in the second device receives information from another module (for example, a radio frequency module or an antenna) in the second device, where the information is sent by another network element to the second device. Alternatively, the chip in the second device sends information to another module (for example, a radio frequency module or an antenna) in another network element, where the information is sent by the second device to the another network element.

When the communication apparatus is a chip used in a first terminal device, the chip in the first terminal device implements a function of the first terminal device in the foregoing method embodiments. The chip in the first terminal device receives information from another module (for example, a radio frequency module or an antenna) in the first terminal device, where the information is sent by another network element to the first terminal device. Alternatively, the chip in the first terminal device sends information to another module (for example, a radio frequency module or an antenna) in another network element, where the information is sent by the first terminal device to the another network element.

When the communication apparatus is a chip used in an access network device, the chip in the access network device implements a function of the access network device in the foregoing method embodiments. The chip in the access network device receives information from another module (for example, a radio frequency module or an antenna) in the access network device, where the information is sent by another network element to the access network device. Alternatively, the access network device chip sends information to another module (for example, a radio frequency module or an antenna) in another network element, where the information is sent by the access network device to the another network element.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any regular processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of the procedures or the functions in embodiments of this application are performed. The computer may be a general-purpose computer, a dedicated computer, a computer network, a network device, a terminal device, or another programmable apparatus. The computer programs or the instructions may be stored in a computer-readable storage medium, or may be transmitted by using a computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid state drive (solid state drive, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, the numbers "first", "second", and the like are only used to distinguish between different objects, for example, to distinguish between different network devices, and constitute no limitation on the scope of embodiments of this application. Embodiments of this application are not limited thereto.

It should be further understood that, in this application, both "when ..." and "if" mean that a network element performs corresponding processing in an objective case, are not intended to limit time, do not mean that the network element is required to have a determining action during implementation, and do not mean any other limitation.

It should be further understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually represents an "or" relationship between the associated objects.

Unless otherwise specified, an expression in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It may be understood that various numbers in embodiments of this application are only used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A wireless communication method, wherein the method comprises:
determining, by a first device, a location manner based on a location requirement on a first terminal device and a second terminal device, wherein the location manner comprises at least one of the following manners: performing positioning through a first interface between the first terminal device and a corresponding access network device, performing positioning through a second interface between the second terminal device and a corresponding access network device, and performing positioning through a third interface between the first terminal device and the second terminal device; and
sending, by the first device, first information according to the location manner, wherein the first information is used to perform positioning in the location manner.

2. The method according to claim 1, wherein the location requirement comprises obtaining at least one of the following position information: first position information of the first terminal device, second position information of the second terminal device, relative position information between the first terminal device and the second terminal device, relative distance information between the first terminal device and the second terminal device, and relative angle information between the first terminal device and the second terminal device.

3. The method according to claim 1 or 2, wherein the determining, by a first device, a location manner based on a location requirement comprises:
determining, by the first device, the location manner based on first capability information, second capability information, and the location requirement, wherein the first capability information indicates at least one of the following information: at least one location manner supported by the first terminal device, location precision corresponding to each of the at least one location manner supported by the first terminal device, a location algorithm corresponding to each of the at least one location manner supported by the first terminal device, a latency corresponding to each of the at least one location manner supported by the first terminal device, a type of an interface between the first terminal device and the second terminal device, a discovery mode supported by the first terminal device, and a communication capability of the interface between the first terminal device and the second terminal device; and
the second capability information indicates at least one of the following information: at least one location manner supported by the second terminal device, location precision corresponding to each of the at least one location manner supported by the second terminal device, a location algorithm corresponding to each of the at least one location manner supported by the second terminal device, a latency corresponding to each of the at least one location manner supported by the second terminal device, the type of the interface between the second terminal device and the first terminal device, a discovery mode supported by the second terminal device, and the communication capability of the interface between the first terminal device and the second terminal device.

4. The method according to claim 3, wherein before the determining, by a first device, a location manner, the method further comprises:
sending, by the first device, a query message, wherein the query message is used to request the first capability information and/or the second capability information; and
receiving, by the first device, the first capability information and/or the second capability information that are/is in response to the query message.

5. The method according to any one of claims 1 to 4, wherein the location manner is performing positioning through the third interface, the location requirement comprises at least one of the following: the relative position information, the relative distance information, and the relative angle information, and the method further comprises:
when the positioning performed through the third interface fails, determining, by the first device, that the location manner is performing positioning through the first interface and performing positioning through the second interface.

6. The method according to any one of claims 1 to 5, wherein the location requirement further comprises at least one of the following information: a precision requirement, a latency requirement, and a QoS level requirement, and the method further comprises:
receiving, by the first device, a location request message from a second device, wherein the location request message comprises at least one of the following information: the location requirement, identification information of the first terminal device, identification information of the second terminal device, the first capability information, the second capability information, a location service identifier, trigger condition information, and action information, wherein the location service identifier indicates a service that requests the position information, the trigger condition information indicates the first terminal device and/or the second terminal device to perform a first action when the position information meets a first condition, and the action information indicates the first action.

7. The method according to claims 1 to 6, wherein the first device is a third terminal device, and the sending, by the first device, first information according to the location manner comprises:
sending, by the first device, the first information to the first terminal device and/or the second terminal device according to the location manner; or
sending, by the first device, the first information to a location management network element according to the location manner.

8. The method according to any one of claims 1 to 6, wherein the first device is a location management network element, and the sending, by the first device, first information according to the location manner comprises:
sending, by the first device, the first information to the first terminal device and/or the second terminal device according to the location manner.

9. The method according to any one of claims 1 to 6, wherein the first device is the first terminal device, and the sending, by the first device, first information according to the location manner comprises:
sending, by the first device, the first information to the second terminal device; or
sending, by the first device, the first information to a location management network element.

10. The method according to any one of claims 2 to 9, wherein the method further comprises:
receiving, by the first device, the position information;
receiving, by the first device, measurement information corresponding to the position information; or
receiving, by the first device, measurement information corresponding to the position information, and determining, by the first device, the position information based on the measurement information.

11. The method according to claim 10, wherein the method further comprises:
sending, by the first device, the measurement information or the position information.

12. A wireless communication apparatus, wherein the apparatus comprises:
a processing unit, configured to determine a location manner based on a location requirement on a first terminal device and a second terminal device, wherein the location manner comprises at least one of the following manners: performing positioning through a first interface between the first terminal device and a corresponding access network device, performing positioning through a second interface between the second terminal device and a corresponding access network device, and performing positioning through a third interface between the first terminal device and the second terminal device; and
a transceiver unit, configured to send first information according to the location manner, wherein the first information is used to perform positioning in the location manner.

13. The apparatus according to claim 12, wherein the location requirement comprises obtaining at least one of the following position information: first position information of the first terminal device, second position information of the second terminal device, relative position information between the first terminal device and the second terminal device, relative distance information between the first terminal device and the second terminal device, and relative angle information between the first terminal device and the second terminal device.

14. The apparatus according to claim 12 or 13, wherein
the processing unit is specifically configured to determine the location manner based on first capability information, second capability information, and the location requirement, wherein the first device determines the location manner based on the first capability information, the second capability information, and the location requirement, and the first capability information indicates at least one of the following information: at least one location manner supported by the first terminal device, location precision corresponding to each of the at least one location manner supported by the first terminal device, a location algorithm corresponding to each of the at least one location manner supported by the first terminal device, a latency corresponding to each of the at least one location manner supported by the first terminal device, a type of an interface between the first terminal device and the second terminal device, a discovery mode supported by the first terminal device, and a communication capability of the interface between the first terminal device and the second terminal device; and
the second capability information indicates at least one of the following information: at least one location manner supported by the second terminal device, location precision corresponding to each of the at least one location manner supported by the second terminal device, a location algorithm corresponding to each of the at least one location manner supported by the second terminal device, a latency corresponding to each of the at least one location manner supported by the second terminal device, the type of the interface between the second terminal device and the first terminal device, a discovery mode supported by the second terminal device, and the communication capability of the interface between the first terminal device and the second terminal device.

15. The apparatus according to claim 14, wherein before the processing unit is configured to determine the location manner,
the transceiver unit is further configured to send a query message, wherein the query message is used to request the first capability information and/or the second capability information, wherein
the transceiver unit is further configured to receive the first capability information and/or the second capability information that are/is in response to the query message.

16. The apparatus according to any one of claims 12 to 15, wherein the location manner is performing positioning through the third interface, the location requirement comprises at least one of the following: the relative position information, the relative distance information, and the relative angle information, and when the positioning performed through the third interface fails,
the processing unit is further configured to determine that the location manner is performing positioning through the first interface and performing positioning through the second interface.

17. The apparatus according to any one of claims 12 to 16, wherein the location requirement further comprises at least one of the following information: a precision requirement, a latency requirement, and a QoS level requirement; and
the transceiver unit is further configured to receive a location request message from a second device, wherein the location request message comprises at least one of the following information: the location requirement, identification information of the first terminal device, identification information of the second terminal device, the first capability information, the second capability information, a location service identifier, trigger condition information, and action information, wherein the location service identifier indicates a service that requests the position information, the trigger condition information indicates the first terminal device and/or the second terminal device to perform a first action when the position information meets a first condition, and the action information indicates the first action.

18. The apparatus according to any one of claims 12 to 17, wherein the apparatus is a third terminal device; and
the transceiver unit is specifically configured to send the first information to the first terminal device and/or the second terminal device according to the location manner; or
the transceiver unit is specifically configured to send the first information to a location management network element according to the location manner.

19. The apparatus according to any one of claims 12 to 17, wherein the apparatus is a location management network element; and
the transceiver unit is specifically configured to send the first information to the first terminal device and/or the second terminal device according to the location manner.

20. The apparatus according to any one of claims 12 to 17, wherein the apparatus is the first terminal device; and
the transceiver unit is specifically configured to send the first information to the second terminal device; or
the transceiver unit is specifically configured to send the first information to a location management network element.

21. The apparatus according to any one of claims 13 to 20, wherein
the transceiver unit is further configured to receive the position information;
the transceiver unit is further configured to receive measurement information corresponding to the position information; or
the transceiver unit is further configured to receive measurement information corresponding to the position information, and the processing unit is further configured to determine the position information based on the measurement information.

22. The apparatus according to claim 21, wherein
the transceiver unit is further configured to send the measurement information or the position information.

23. A communication apparatus, comprising:
a processor, wherein the processor is coupled to a memory, wherein
the processor is configured to execute a computer program or instructions stored in the memory, to enable the apparatus to perform the method according to any one of claims 1 to 11.

24. A computer program product, comprising instructions, wherein when the instructions are run on a computer, the computer is enabled to perform the method according to any one of claims 1 to 11.

25. A chip, wherein the chip comprises at least one processor, and when program instructions are executed by the at least one processor, the method according to any one of claims 1 to 11 is performed.

26. A computer-readable storage medium, comprising a computer program, wherein when the computer program is run on a computer, the computer is enabled to perform the method according to any one of claims 1 to 11.
